# EUROPEAN PATENT APPLICATION

(11) **EP 4 546 928 A1**
(43) Date of publication of application: **30.04.2025**
(21) Application number: 23827547.3
(22) Date of filing: 22.06.2023
(51) Int. Cl.: H04W 74/08, H04W 72/12, H04W 72/04, H04W 24/08, H04L 5/00, H04L 1/18, H04L 27/26

(54) **METHOD AND DEVICE FOR SIDELINK COMMUNICATION IN UNLICENSED BAND**

(30) Priority: 22.06.2022 KR 20220076338; 27.09.2022 KR 20220122763; 04.11.2022 KR 20220145873; 15.02.2023 KR 20230020163; 21.06.2023 KR 20230079848
(71) Applicant: Electronics and Telecommunications Research Institute, Daejeon 34129 (KR)
(72) Inventor: LEE, Jung Hoon, Daejeon 34129 (KR); KIM, Cheul Soon, Daejeon 34129 (KR); MOON, Sung Hyun, Daejeon 34129 (KR)
(74) Representative: Betten & Resch
(86) International application number: PCT/KR2023/008697
(87) International publication number: WO 2023/249438

(57) **Abstract**

Disclosed are a method and device for sidelink communication in an unlicensed band. The method of a first terminal comprises the steps of: receiving SCI from a second terminal; receiving data scheduled by the SCI from the second terminal; generating an HARQ-ACK for the data; and conducting a first LBT operation for transmission of the HARQ-ACK in a first PSFCH occasion among N PSFCH occasions set in the first terminal.

## Description

### [Technical Field]

The present disclosure relates to a sidelink communication technique, and more particularly, to a technique for sidelink communication in an unlicensed band.

### [Background Art]

The communication system (e.g., a new radio (NR) communication system) using a higher frequency band (e.g., a frequency band of 6GHz or above) than a frequency band (e.g., a frequency band of 6GHz or below) of the long term evolution (LTE) communication system (or, LTE-A communication system) is being considered for processing of soaring wireless data. The NR system may support not only a frequency band of 6 GHz or below, but also a frequency band of 6 GHz or above, and may support various communication services and scenarios compared to the LTE system. In addition, requirements of the NR system may include enhanced Mobile BroadBand (eMBB), Ultra Reliable Low Latency Communication (URLLC), and Massive Machine Type Communication (mMTC).

Meanwhile, sidelink (SL) communication may be performed in an unlicensed band. A first terminal may transmit data to a second terminal in the unlicensed band, and the second terminal may transmit a hybrid automatic repeat request-acknowledgement (HARQ-ACK) for the data to the first terminal. In order to transmit the HARQ-ACK in the unlicensed band, the second terminal may perform a listen-before-talk (LBT) operation. If the LBT operation fails, the second terminal may not be able to transmit the HARQ-ACK to the first terminal. In this case, since the reliability of the communication system is lowered, methods for solving the above problem are required.

### [Disclosure]

### [Technical Problem]

The present disclosure is directed to providing a method and an apparatus for sidelink communication in an unlicensed band.

### [Technical Solution]

A method of a first terminal, according to a first exemplary embodiment of the present disclosure for achieving the above-described objective, may comprise: receiving sidelink control information (SCI) from a second terminal; receiving data scheduled by the SCI from the second terminal; generating a hybrid automatic repeat request-acknowledgement (HARQ-ACK) for the data; and performing a first listen before talk (LBT) operation for transmission of the HARQ-ACK in a first physical sidelink feedback channel (PSFCH) occasion among N PSFCH occasions configured in the first terminal, N being a natural number.

The N PSFCH occasions may include the first PSFCH occasion and (N-1) PSFCH occasion(s), and the first PSFCH occasion and the (N-1) PSFCH occasion(s) may be configured by one message or configured independently by different messages.

The SCI may include first information indicating whether the N PSFCH occasions are applied, the N PSFCH occasions may be used for transmission of the HARQ-ACK when the first information indicates that the N PSFCH occasions are applied, and only the first PSFCH occasion may be used for transmission of the HARQ-ACK when the first information indicates that the N PSFCH occasions are not applied.

When the first terminal cannot transmit the ARQ-ACK within a channel occupancy time (COT), the N PSFCH occasions may be used for transmission of the HARQ-ACK.

The method may further comprise: in response to that the first LBT operation fails, performing a second LBT operation for transmission of the HARQ-ACK in a second PSFCH occasion among the N PSFCH occasions; and in response to that the second LBT operation succeeds, transmitting a PSFCH format including the HARQ-ACK to the second terminal in the second PSFCH occasion.

The PSFCH format may be repeatedly transmitted in frequency domain.

The method may further comprise: transmitting a first signal, wherein transmission of the PSFCH format and transmission of the first signal may be multiplexed in frequency domain, the transmission of the PFSCH format may be performed in dedicated resource block(s) (RB(s)) in frequency domain, and the transmission of the first signal may be performed in common RB(s) in frequency domain.

The transmission of the first signal in the common RB(s) may be performed when a frequency interval between the dedicated RB(s) and the common RB(s) exceeds a threshold.

The method may further comprise: transmitting a first signal in common RB(s) to maintain a COT.

A method of a second terminal, according to a second exemplary embodiment of the present disclosure for achieving the above-described objective, may comprise: transmitting sidelink control information (SCI) to a first terminal; transmitting data scheduled by the SCI to the first terminal; and performing a monitoring operation on one or more physical sidelink feedback channel (PSFCH) occasions among N PSFCH occasions configured in the first terminal to receive a hybrid automatic repeat request-acknowledgement (HARQ-ACK) for the data, N being a natural number.

The N PSFCH occasions may include the first PSFCH occasion and (N-1) PSFCH occasion(s), and the first PSFCH occasion and the (N-1) PSFCH occasion(s) may be configured by one message or configured independently by different messages.

The SCI may include first information indicating whether the N PSFCH occasions are applied, the N PSFCH occasions may be used for transmission of the HARQ-ACK when the first information indicates that the N PSFCH occasions are applied, and only the first PSFCH occasion may be used for transmission of the HARQ-ACK when the first information indicates that the N PSFCH occasions are not applied.

When the first terminal cannot transmit the ARQ-ACK within a channel occupancy time (COT), the N PSFCH occasions may be used for transmission of the HARQ-ACK.

The method may further comprise: receiving a PSFCH format including the HARQ-ACK from the first terminal based on the monitoring operation.

The PSFCH format may be repeatedly received in frequency domain or received in dedicated resource block(s) (RB(s)) in frequency domain.

A first terminal, according to a third exemplary embodiment of the present disclosure for achieving the above-described objective, may comprise a processor, and the processor may cause the first terminal to perform: receiving sidelink control information (SCI) from a second terminal; receiving data scheduled by the SCI from the second terminal; generating a hybrid automatic repeat request-acknowledgement (HARQ-ACK) for the data; and performing a first listen before talk (LBT) operation for transmission of the HARQ-ACK in a first physical sidelink feedback channel (PSFCH) occasion among N PSFCH occasions configured in the first terminal, N being a natural number.

The SCI may include first information indicating whether the N PSFCH occasions are applied, the N PSFCH occasions may be used for transmission of the HARQ-ACK when the first information indicates that the N PSFCH occasions are applied, and only the first PSFCH occasion may be used for transmission of the HARQ-ACK when the first information indicates that the N PSFCH occasions are not applied.

When the first terminal cannot transmit the ARQ-ACK within a channel occupancy time (COT), the N PSFCH occasions may be used for transmission of the HARQ-ACK.

The processor may further cause the first terminal to perform: in response to that the first LBT operation fails, performing a second LBT operation for transmission of the HARQ-ACK in a second PSFCH occasion among the N PSFCH occasions; and in response to that the second LBT operation succeeds, transmitting a PSFCH format including the HARQ-ACK to the second terminal in the second PSFCH occasion.

The processor may further cause the first terminal to transmit a first signal, wherein transmission of the PSFCH format and transmission of the first signal may be multiplexed in frequency domain, the transmission of the PSFCH format may be performed in dedicated resource block(s) (RB(s)) in frequency domain, and the transmission of the first signal may be performed in common RB(s) in frequency domain.

### [Advantageous Effects]

According to the present disclosure, a plurality of PSFCH occasions may be configured. The terminal may perform a first LBT operation to perform PSFCH transmission in a first PSFCH occasion among the plurality of PSFCH occasions. If the first LBT operation fails, the terminal may perform a second LBT operation to perform PSFCH transmission in a second PSFCH occasion among the plurality of PSFCH occasions. According to the above-described method, since a plurality of LBT operations can be performed for PSFCH transmission, the PSFCH transmission can be guaranteed.

A PSFCH format may be repeatedly transmitted in the frequency domain. The transmission of the PSFCH format and transmission of an arbitrary signal may be multiplexed in the frequency domain. According to the above-described method, Occupied Channel Bandwidth (OCB) regulations can be satisfied.

### [Description of Drawings]

FIG. 1 is a conceptual diagram illustrating a first exemplary embodiment of a communication system.
FIG. 2 is a block diagram illustrating a first exemplary embodiment of a communication node constituting a communication system.
FIG. 3 is a conceptual diagram illustrating a first exemplary embodiment of a type 1 frame.
FIG. 4 is a conceptual diagram illustrating a first exemplary embodiment of a type 2 frame.
FIG. 5 is a conceptual diagram illustrating a first exemplary embodiment of a transmission method of SS/PBCH block in a communication system.
FIG. 6 is a conceptual diagram illustrating a first exemplary embodiment of an SS/PBCH block in a communication system.
FIG. 7 is a conceptual diagram illustrating a second exemplary embodiment of a method of transmitting SS/PBCH blocks in a communication system.
FIG. 8 is a conceptual diagram illustrating a first exemplary embodiment of SSB burst configuration.
FIG. 9A is a conceptual diagram illustrating an RMSI CORESET mapping pattern #1 in a communication system.
FIG. 9B is a conceptual diagram illustrating an RMSI CORESET mapping pattern #2 in a communication system.
FIG. 9C is a conceptual diagram illustrating an RMSI CORESET mapping pattern #3 in a communication system.
FIG. 10 is a conceptual diagram illustrating a first exemplary embodiment of configuration of a slot in which a PSFCH is configured.
FIG. 11 is a conceptual diagram illustrating a first exemplary embodiment of a PSFCH for ACK/NACK transmission.
FIG. 12 is a conceptual diagram illustrating exemplary embodiments of a method for multiplexing a control channel and a data channel in sidelink communication.
FIG. 13 is a conceptual diagram illustrating a first exemplary embodiment of a resource selection operation.
FIG. 14 is a conceptual diagram illustrating a first exemplary embodiment of a resource reselection operation.
FIG. 15A is a conceptual diagram illustrating a first exemplary embodiment of AGC symbols for FDM SL transmission in a plurality of RB sets.
FIG. 15B is a conceptual diagram illustrating a second exemplary embodiment of AGC symbols for FDM SL transmission in a plurality of RB sets.
FIG. 16 is a conceptual diagram illustrating a first exemplary embodiment of a method for transmitting a PSFCH within a COT.
FIG. 17A is a conceptual diagram illustrating a first exemplary embodiment of a resource configuration method for a plurality of PSFCH occasions.
FIG. 17B is a conceptual diagram illustrating a second exemplary embodiment of a resource configuration method for a plurality of PSFCH occasions.
FIG. 18A is a conceptual diagram illustrating a first exemplary embodiment of a PSFCH transmission method.
FIG. 18B is a conceptual diagram illustrating a second exemplary embodiment of a PSFCH transmission method.
FIG. 19A is a conceptual diagram illustrating a first exemplary embodiment of PSFCH transmission having redundant RB(s).
FIG. 19B is a conceptual diagram illustrating a second exemplary embodiment of PSFCH transmission having redundant RB(s).
FIG. 19C is a conceptual diagram illustrating a third exemplary embodiment of PSFCH transmission having redundant RB(s).

### [Mode for Invention]

Exemplary embodiments of the present disclosure are disclosed herein. However, specific structural and functional details disclosed herein are merely representative for purposes of describing embodiments of the present disclosure. Thus, embodiments of the present disclosure may be embodied in many alternate forms and should not be construed as limited to embodiments of the present disclosure set forth herein.

Accordingly, while the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".

In exemplary embodiments of the present disclosure, "(re)transmission" may mean "transmission", "retransmission", or "transmission and retransmission", "(re)configuration" may mean "configuration", "reconfiguration", or "configuration and reconfiguration", "(re)connection" may mean "connection", "reconnection", or "connection and reconnection", and "(re)access" may mean "access", "re-access", or "access and re-access".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be the 4G communication system (e.g., Long-Term Evolution (LTE) communication system or LTE-A communication system), the 5G communication system (e.g., New Radio (NR) communication system), the sixth generation (6G) communication system, or the like. The 4G communication system may support communications in a frequency band of 6 GHz or below, and the 5G communication system may support communications in a frequency band of 6 GHz or above as well as the frequency band of 6 GHz or below. The communication system to which the exemplary embodiments according to the present disclosure are applied is not limited to the contents described below, and the exemplary embodiments according to the present disclosure may be applied to various communication systems. Here, the communication system may be used in the same sense as a communication network, 'LTE' may refer to '4G communication system', 'LTE communication system', or 'LTE-A communication system', and 'NR' may refer to '5G communication system' or 'NR communication system'.

In exemplary embodiments, "an operation (e.g., transmission operation) is configured" may mean that "configuration information (e.g., information element(s) or parameter(s)) for the operation and/or information indicating to perform the operation is signaled". "Information element(s) (e.g., parameter(s)) are configured" may mean that "corresponding information element(s) are signaled". The signaling may be at least one of system information (SI) signaling (e.g., transmission of system information block (SIB) and/or master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)).

Hereinafter, even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a terminal is described, a base station corresponding to the terminal may perform an operation corresponding to the operation of the terminal. Conversely, when an operation of a base station is described, a terminal corresponding to the base station may perform an operation corresponding to the operation of the base station. In addition, when an operation of a first terminal is described, a second terminal corresponding to the first terminal may perform an operation corresponding to the operation of the first terminal. Conversely, when an operation of a second terminal is described, a first terminal corresponding to the second terminal may perform an operation corresponding to the operation of the second terminal.

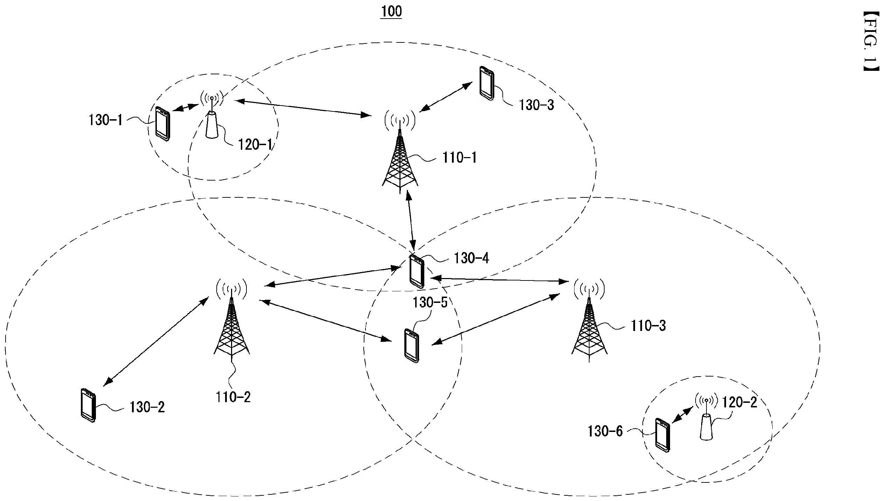

FIG. 1 is a conceptual diagram illustrating a first exemplary embodiment of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further comprise a core network (e.g., a serving gateway (S-GW), a packet data network (PDN) gateway (P-GW), and a mobility management entity (MME)). When the communication system 100 is a 5G communication system (e.g., new radio (NR) system), the core network may include an access and mobility management function (AMF), a user plane function (UPF), a session management function (SMF), and the like.

The plurality of communication nodes 110 to 130 may support a communication protocol defined by the 3rd generation partnership project (3GPP) specifications (e.g., LTE communication protocol, LTE-A communication protocol, NR communication protocol, or the like). The plurality of communication nodes 110 to 130 may support code division multiple access (CDMA) technology, wideband CDMA (WCDMA) technology, time division multiple access (TDMA) technology, frequency division multiple access (FDMA) technology, orthogonal frequency division multiplexing (OFDM) technology, filtered OFDM technology, cyclic prefix OFDM (CP-OFDM) technology, discrete Fourier transform-spread-OFDM (DFT-s-OFDM) technology, orthogonal frequency division multiple access (OFDMA) technology, single carrier FDMA (SC-FDMA) technology, non-orthogonal multiple access (NOMA) technology, generalized frequency division multiplexing (GFDM) technology, filter band multi-carrier (FBMC) technology, universal filtered multi-carrier (UFMC) technology, space division multiple access (SDMA) technology, or the like. Each of the plurality of communication nodes may have the following structure.

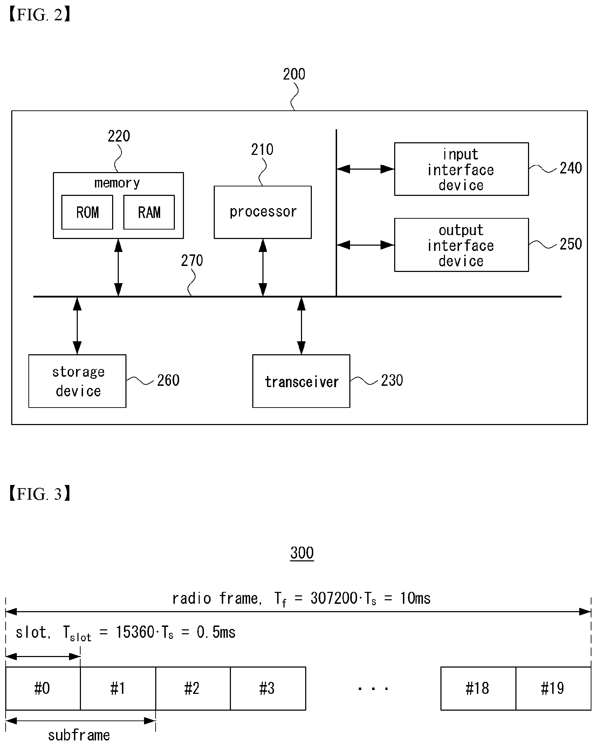

FIG. 2 is a block diagram illustrating a first exemplary embodiment of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B (NB), a evolved Node-B (eNB), a gNB, an advanced base station (ABS), a high reliability-base station (HR-BS), a base transceiver station (BTS), a radio base station, a radio transceiver, an access point, an access node, a radio access station (RAS), a mobile multihop relay-base station (MMR-BS), a relay station (RS), an advanced relay station (ARS), a high reliability-relay station (HR-RS), a home NodeB (HNB), a home eNodeB (HeNB), a road side unit (RSU), a radio remote head (RRH), a transmission point (TP), a transmission and reception point (TRP), or the like.

Each of the plurality of terminals 130-1, 130-2, 130-3, 130-4, 130-5, and 130-6 may refer to a user equipment (UE), a terminal equipment (TE), an advanced mobile station (AMS), a high reliability-mobile station (HR-MS), a terminal, an access terminal, a mobile terminal, a station, a subscriber station, a mobile station, a portable subscriber station, a node, a device, an on-board unit (OBU), or the like.

Each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support a multi-input multi-output (MIMO) transmission (e.g., a single-user MIMO (SU-MIMO), a multi-user MIMO (MU-MIMO), a massive MIMO, or the like), a coordinated multipoint (CoMP) transmission, a carrier aggregation (CA) transmission, a transmission in unlicensed band, device-to-device (D2D) communication (or, proximity services (ProSe)), Internet of Things (IoT) communications, dual connectivity (DC), or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2 (i.e., the operations supported by the plurality of base stations 110-1, 110-2, 110-3, 120-1, and 120-2). For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control D2D communications between the fourth terminal 130-4 and the fifth terminal 130-5, and thus the fourth terminal 130-4 and the fifth terminal 130-5 may perform the D2D communications under control of the second base station 110-2 and the third base station 110-3.

Meanwhile, the communication system may support three types of frame structures. A type 1 frame structure may be applied to a frequency division duplex (FDD) communication system, a type 2 frame structure may be applied to a time division duplex (TDD) communication system, and a type 3 frame structure may be applied to an unlicensed band based communication system (e.g., a licensed assisted access (LAA) communication system).

FIG. 3 is a conceptual diagram illustrating a first exemplary embodiment of a type 1 frame.

Referring to FIG. 3, a radio frame 300 may comprise 10 subframes, and a subframe may comprise 2 slots. Thus, the radio frame 300 may comprise 20 slots (e.g., slot #0, slot #1, slot #2, slot #3, ..., slot #18, and slot #19). The length T_{f} of the radio frame 300 may be 10 milliseconds (ms). The length of the subframe may be 1 ms, and the length Tₛₗₒₜ of a slot may be 0.5 ms. Here, Tₛ may indicate a sampling time, and may be 1/30,720,000s.

The slot may be composed of a plurality of OFDM symbols in the time domain, and may be composed of a plurality of resource blocks (RBs) in the frequency domain. The RB may be composed of a plurality of subcarriers in the frequency domain. The number of OFDM symbols constituting the slot may vary depending on configuration of a cyclic prefix (CP). The CP may be classified into a normal CP and an extended CP. If the normal CP is used, the slot may be composed of 7 OFDM symbols, in which case the subframe may be composed of 14 OFDM symbols. If the extended CP is used, the slot may be composed of 6 OFDM symbols, in which case the subframe may be composed of 12 OFDM symbols.

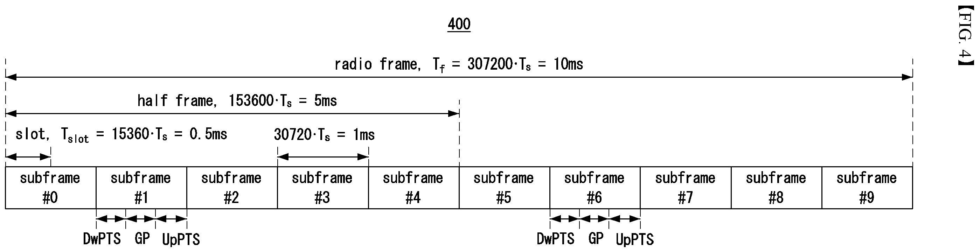

FIG. 4 is a conceptual diagram illustrating a first exemplary embodiment of a type 2 frame.

Referring to FIG. 4, a radio frame 400 may comprise two half frames, and a half frame may comprise 5 subframes. Thus, the radio frame 400 may comprise 10 subframes. The length T_{f} of the radio frame 400 may be 10 ms. The length of the half frame may be 5 ms. The length of the subframe may be 1 ms. Here, Tₛ may be 1/30,720,000s.

The radio frame 400 may include at least one downlink subframe, at least one uplink subframe, and a least one special subframe. Each of the downlink subframe and the uplink subframe may include two slots. The length Tₛₗₒₜ of a slot may be 0.5 ms. Among the subframes included in the radio frame 400, each of the subframe #1 and the subframe #6 may be a special subframe. For example, when a switching periodicity between downlink and uplink is 5 ms, the radio frame 400 may include 2 special subframes. Alternatively, the switching periodicity between downlink and uplink is 10 ms, the radio frame 400 may include one special subframe. The special subframe may include a downlink pilot time slot (DwPTS), a guard period (GP), and an uplink pilot time slot (UpPTS).

The downlink pilot time slot may be regarded as a downlink interval and may be used for cell search, time and frequency synchronization acquisition of the terminal, channel estimation, and the like. The guard period may be used for resolving interference problems of uplink data transmission caused by delay of downlink data reception. Also, the guard period may include a time required for switching from the downlink data reception operation to the uplink data transmission operation. The uplink pilot time slot may be used for uplink channel estimation, time and frequency synchronization acquisition, and the like. Transmission of a physical random access channel (PRACH) or a sounding reference signal (SRS) may be performed in the uplink pilot time slot.

The lengths of the downlink pilot time slot, the guard period, and the uplink pilot time slot included in the special subframe may be variably adjusted as needed. In addition, the number and position of each of the downlink subframe, the uplink subframe, and the special subframe included in the radio frame 400 may be changed as needed.

In the communication system, a transmission time interval (TTI) may be a basic time unit for transmitting coded data through a physical layer. A short TTI may be used to support low latency requirements in the communication system. The length of the short TTI may be less than 1 ms. The conventional TTI having a length of 1 ms may be referred to as a base TTI or a regular TTI. That is, the base TTI may be composed of one subframe. In order to support transmission on a base TTI basis, signals and channels may be configured on a subframe basis. For example, a cell-specific reference signal (CRS), a physical downlink control channel (PDCCH), a physical downlink shared channel (PDSCH), a physical uplink control channel (PUCCH), a physical uplink shared channel (PUSCH), and the like may exist in each subframe.

On the other hand, a synchronization signal (e.g., a primary synchronization signal (PSS) and a secondary synchronization signal (SSS)) may exist for every 5 subframes, and a physical broadcast channel (PBCH) may exist for every 10 subframes. Also, each radio frame may be identified by an SFN, and the SFN may be used for defining transmission of a signal (e.g., a paging signal, a reference signal for channel estimation, a signal for channel state information, etc.) longer than one radio frame. The periodicity of the SFN may be 1024.

In the LTE system, the PBCH may be a physical layer channel used for transmission of system information (e.g., master information block (MIB)). The PBCH may be transmitted every 10 subframes. That is, the transmission periodicity of the PBCH may be 10 ms, and the PBCH may be transmitted once in the radio frame. The same MIB may be transmitted during 4 consecutive radio frames, and after 4 consecutive radio frames, the MIB may be changed according to a situation of the LTE system. The transmission period for which the same MIB is transmitted may be referred to as a 'PBCH TTI', and the PBCH TTI may be 40ms. That is, the MIB may be changed for each PBCH TTI.

The MIB may be composed of 40 bits. Among the 40 bits constituting the MIB, 3 bits may be used to indicate a system band, 3 bits may be used to indicate physical hybrid automatic repeat request (ARQ) indicator channel (PHICH) related information, 8 bits may be used to indicate an SFN, 10 bits may be configured as reserved bits, and 16 bits may be used for a cyclic redundancy check (CRC).

The SFN for identifying the radio frame may be composed of a total of 10 bits (B9 to B0), and the most significant bits (MSBs) 8 bits (B9 to B2) among the 10 bits may be indicated by the PBCH (i.e., MIB). The MSBs 8 bits (B9 to B2) of the SFN indicated by the PBCH (i.e., MIB) may be identical during 4 consecutive radio frames (i.e., PBCH TTI). The least significant bits (LSBs) 2 bits (B1 to B0) of the SFN may be changed during 4 consecutive radio frames (i.e., PBCH TTI), and may not be explicitly indicated by the PBCH (i.e., MIB). The LSBs (2 bits (B1 to B0)) of the SFN may be implicitly indicated by a scrambling sequence of the PBCH (hereinafter referred to as 'PBCH scrambling sequence').

A gold sequence generated by being initialized by a cell ID may be used as the PBCH scrambling sequence, and the PBCH scrambling sequence may be initialized for each four consecutive radio frames (e.g., each PBCH TTI) based on an operation of 'mod (SFN, 4)'. The PBCH transmitted in a radio frame corresponding to an SFN with LSBs 2 bits (B1 to B0) set to '00' may be scrambled by the gold sequence generated by being initialized by the cell ID. Thereafter, the gold sequences generated according to the operation of 'mod (SFN, 4)' may be used to scramble the PBCH transmitted in the radio frames corresponding to SFNs with LSBs 2 bits (B1 to B0) set to '01', '10', and '11'.

Accordingly, the terminal having acquired the cell ID in the initial cell search process may identify the value of the LSBs 2 bits (B1 to B0) of the SFN (e.g., '00', '01', '10', or '11') based on the PBCH scramble sequence obtained in the decoding process for the PBCH (i.e., MIB). The terminal may use the LSBs 2 bits (B1 to B0) of the SFN obtained based on the PBCH scrambling sequence and the MSBs 8 bits (B9 to B2) of the SFN indicated by the PBCH (i.e., MIB) so as to identify the SFN (i.e., the entire bits B9 to B0 of the SFN).

On the other hand, the communication system may support not only a high transmission rate but also technical requirements for various service scenarios. For example, the communication system may support an enhanced mobile broadband (eMBB) service, an ultra-reliable low-latency communication (URLLC) service, a massive machine type communication (mMTC) service, and the like.

The subcarrier spacing of the communication system (e.g., OFDM-based communication system) may be determined based on a carrier frequency offset (CFO) and the like. The CFO may be generated by a Doppler effect, a phase drift, or the like, and may increase in proportion to an operation frequency. Therefore, in order to prevent the performance degradation of the communication system due to the CFO, the subcarrier spacing may increase in proportion to the operation frequency. On the other hand, as the subcarrier spacing increases, a CP overhead may increase. Therefore, the subcarrier spacing may be configured based on a channel characteristic, a radio frequency (RF) characteristic, etc. according to a frequency band.

The communication system may support numerologies defined in Table 1 below.

**[Table 1]**

| **Numerology (*µ*)** | **0** | **1** | **2** | **3** | **4** | **5** |
|---|---|---|---|---|---|---|
| Subcarrier spacing | 15 kHz | 30 kHz | 60 kHz | 120 kHz | 240 kHz | 480 kHz |
| OFDM symbol length [us] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

For example, the subcarrier spacing of the communication system may be configured to 15 kHz, 30 kHz, 60 kHz, or 120 kHz. The subcarrier spacing of the LTE system may be 15 kHz, and the subcarrier spacing of the NR system may be 1, 2, 4, or 8 times the conventional subcarrier spacing of 15 kHz. If the subcarrier spacing increases by exponentiation units of 2 of the conventional subcarrier spacing, the frame structure can be easily designed.

The communication system may support FR1 as well as FR2. The FR2 may be classified into FR2-1 and FR2-2. The FR1 may be a frequency band of 6 GHz or below, the FR2-1 may be a frequency band of 24.25 to 52.6, and the FR2-2 may be a frequency band of 52.6 to 71 GHz. In an exemplary embodiment, the FR2 may be the FR2-1, the FR2-1, or a frequency band including the FR2-1 and FR2-2. In each of the FR1, FR2-1, and FR2-2, subcarrier spacings available for data transmission may be defined as shown in Table 2 below. In each of the FR1, the FR2-1, and the FR2-2, SCSs available for synchronization signal block (SSB) transmission may be defined as shown in Table 3 below. In each of the FR1, the FR2-1, and the FR2-2, SCSs available for RACH transmission (e.g., Msg1 or Msg-A) may be defined as shown in Table 4 below.

**[Table 2]**

| **data** | | |
|---|---|---|
| FR1 | FR2-1 | FR2-2 |
| 15 kHz, 30 kHz, 60 kHz (optional) | 60 kHz, 120 kHz | 120 kHz, 480 kHz, 960 kHz |

**[Table 3]**

| **SSB** | | |
|---|---|---|
| FR1 | FR2-1 | FR2-2 |
| 15 kHz, 30 kHz | 120 kHz, 240 kHz | 120 kHz, 480 kHz, 960 kHz |

**[Table 4]**

| **RACH** | | |
|---|---|---|
| FR1 | FR2-1 | FR2-2 |
| 1.25 kHz, 5 kHz, 15 kHz, 30 kHz | 60 kHz, 120 kHz | 120 kHz, 480 kHz, 960 kHz |

The communication system may support a wide frequency band (e.g., several hundred MHz to tens of GHz). Since the diffraction characteristic and the reflection characteristic of the radio wave are poor in a high frequency band, a propagation loss (e.g., path loss, reflection loss, and the like) in a high frequency band may be larger than a propagation loss in a low frequency band. Therefore, a cell coverage of a communication system supporting a high frequency band may be smaller than a cell coverage of a communication system supporting a low frequency band. In order to solve such the problem, a beamforming scheme based on a plurality of antenna elements may be used to increase the cell coverage in the communication system supporting a high frequency band.

The beamforming scheme may include a digital beamforming scheme, an analog beamforming scheme, a hybrid beamforming scheme, and the like. In the communication system using the digital beamforming scheme, a beamforming gain may be obtained using a plurality of RF paths based on a digital precoder or a codebook. In the communication system using the analog beamforming scheme, a beamforming gain may be obtained using analog RF devices (e.g., phase shifter, power amplifier (PA), variable gain amplifier (VGA), and the like) and an antenna array.

Because of the need for expensive digital to analog converters (DACs) or analog to digital converters (ADCs) for digital beamforming schemes and transceiver units corresponding to the number of antenna elements, the complexity of antenna implementation may be increased to increase the beamforming gain. In case of the communication system using the analog beamforming scheme, since a plurality of antenna elements are connected to one transceiver unit through phase shifters, the complexity of the antenna implementation may not increase greatly even if the beamforming gain is increased. However, the beamforming performance of the communication system using the analog beamforming scheme may be lower than the beamforming performance of the communication system using the digital beamforming scheme. Further, in the communication system using the analog beamforming scheme, since the phase shifter is adjusted in the time domain, frequency resources may not be efficiently used. Therefore, a hybrid beam forming scheme, which is a combination of the digital scheme and the analog scheme, may be used.

When the cell coverage is increased by the use of the beamforming scheme, common control channels and common signals (e.g., reference signal and synchronization signal) for all terminals belonging to the cell coverage as well as control channels and data channels for each terminal may also be transmitted based on the beamforming scheme. In this case, the common control channels and the common signals for all terminals belonging to the cell coverage may be transmitted based on a beam sweeping scheme.

In addition, in the NR system, a synchronization signal/physical broadcast channel (SS/PBCH) block may also be transmitted in a beam sweeping scheme. The SS/PBCH block may be composed of a PSS, an SSS, a PBCH, and the like. In the SS/PBCH block, the PSS, the SSS, and the PBCH may be configured in a time division multiplexing (TDM) manner. The SS/PBCH block may be referred also to as an 'SS block (SSB)'. One SS/PBCH block may be transmitted using N consecutive OFDM symbols. Here, N may be an integer equal to or greater than 4. The base station may periodically transmit the SS/PBCH block, and the terminal may acquire frequency/time synchronization, a cell ID, system information, and the like based on the SS/PBCH block received from the base station. The SS/PBCH block may be transmitted as follows.

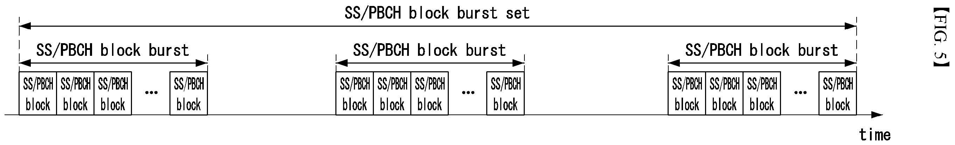

FIG. 5 is a conceptual diagram illustrating a first exemplary embodiment of a transmission method of SS/PBCH block in a communication system.

Referring to FIG. 5, one or more SS/PBCH blocks may be transmitted in a beam sweeping scheme within an SS/PBCH block burst set. Up to L SS/PBCH blocks may be transmitted within one SS/PBCH block burst set. L may be an integer equal to or greater than 2, and may be defined in the 3GPP standard. Depending on a region of a system frequency, L may vary. Within the SS/PBCH block burst set, the SS/PBCH blocks may be located consecutively or distributedly. The consecutive SS/PBCH blocks may be referred to as an 'SS/PBCH block burst'. The SS/PBCH block burst set may be repeated periodically, and system information (e.g., MIB) transmitted through the PBCHs of the SS/PBCH blocks within the SS/PBCH block burst set may be the same. An index of the SS/PBCH block, an index of the SS/PBCH block burst, an index of an OFDM symbol, an index of a slot, and the like may be indicated explicitly or implicitly by the PBCH.

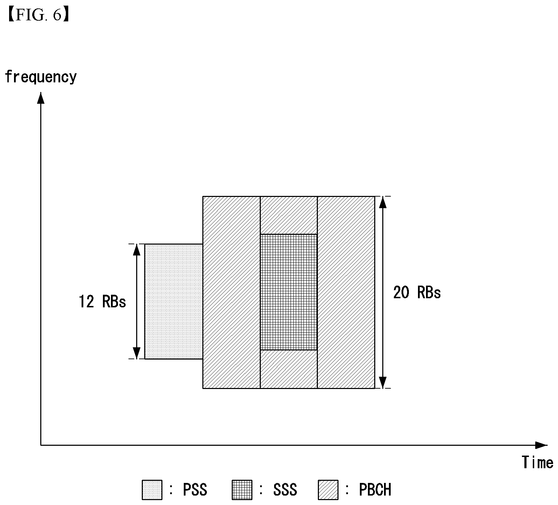

FIG. 6 is a conceptual diagram illustrating a first exemplary embodiment of an SS/PBCH block in a communication system.

Referring to FIG. 6, signals and a channel are arranged within one SS/PBCH block in the order of 'PSS→PBCH→SSS→PBCH'. The PSS, SSS, and PBCH within the SS/PBCH block may be configured in a TDM scheme. In a symbol where the SSS is located, the PBCH may be located in frequency resources above the SSS and frequency resources below the SSS. That is, the PBCH may be transmitted in both end bands adjacent to the frequency band in which the SSS is transmitted. When the maximum number of SS/PBCH blocks is 8 in the sub 6GHz frequency band, an SS/PBCH block index may be identified based on a demodulation reference signal used for demodulating the PBCH (hereinafter, referred to as 'PBCH DMRS'). When the maximum number of SSBs is 64 in the over 6GHz frequency band, LSB 3 bits of 6 bits representing the SS/PBCH block index may be identified based on the PBCH DMRS, and the remaining MSB 3 bits may be identified based on a payload of the PBCH.

The maximum system bandwidth that can be supported in the NR system may be 400 MHz. The size of the maximum bandwidth that can be supported by the terminal may vary depending on the capability of the terminal. Therefore, the terminal may perform an initial access procedure (e.g., initial connection procedure) by using some of the system bandwidth of the NR system supporting a wide band. In order to support access procedures of terminals supporting various sizes of bandwidths, SS/PBCH blocks may be multiplexed in the frequency domain within the system bandwidth of the NR system supporting a wide band. In this case, the SS/PBCH blocks may be transmitted as follows.

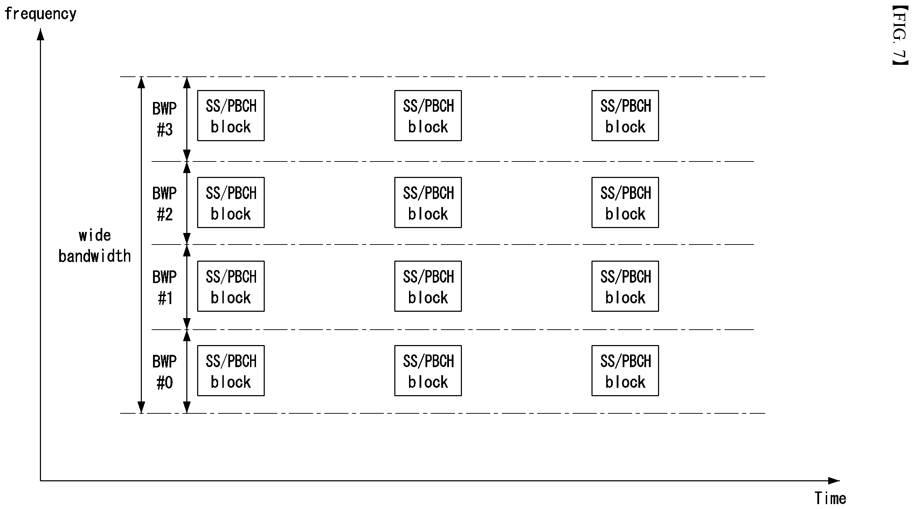

FIG. 7 is a conceptual diagram illustrating a second exemplary embodiment of a method of transmitting SS/PBCH blocks in a communication system.

Referring to FIG. 7, a wideband component carrier (CC) may include a plurality of bandwidth parts (BWPs). For example, the wideband CC may include 4 BWPs. The base station may transmit SS/PBCH blocks in the respective BWPs #0 to #3 belonging to the wideband CC. The terminal may receive the SS/PBCH block(s) from one or more BWPs of the BWPs #0 to #3, and may perform an initial access procedure using the received SS/PBCH block.

After detecting the SS/PBCH block, the terminal may acquire system information (e.g., remaining minimum system information (RMSI)), and may perform a cell access procedure based on the system information. The RMSI may be transmitted on a PDSCH scheduled by a PDCCH. Configuration information of a control resource set (CORESET) in which the PDCCH including scheduling information of the PDSCH through which the RMSI is transmitted may be transmitted on a PBCH within the SS/PBCH block. A plurality of SS/PBCH blocks may be transmitted in the entire system band, and one or more SS/PBCH blocks among the plurality of SS/PBCH blocks may be SS/PBCH block(s) associated with the RMSI. The remaining SS/PBCH blocks may not be associated with the RMSI. The SS/PBCH block associated with the RMSI may be defined as a 'cell defining SS/PBCH block'. The terminal may perform a cell search procedure and an initial access procedure by using the cell-defining SS/PBCH block. The SS/PBCH block not associated with the RMSI may be used for a synchronization procedure and/or a measurement procedure in the corresponding BWP. The BWP(s) through which the SS/PBCH block is transmitted may be limited to one or more BWPs within a wide bandwidth.

The positions at which the SSBs are transmitted in the time domain may be defined differently according to an SCS and a value of L. In exemplary embodiments, the SCS may mean a subcarrier size. The SSB may be transmitted in some symbols within one slot, and a short UL transmission (e.g., uplink control information (UCI) transmission) may be performed in the remaining symbols not used for the SSB transmission within one slot. When the SSB is transmitted in radio resources to which a large SCS (e.g., 120 kHz SCS or 240 kHz SCS) is applied, a gap may be configured in the middle of consecutive slots including the SSB so that a long UL transmission (e.g., transmission of URLLC traffic) can be performed at least every 1 ms.

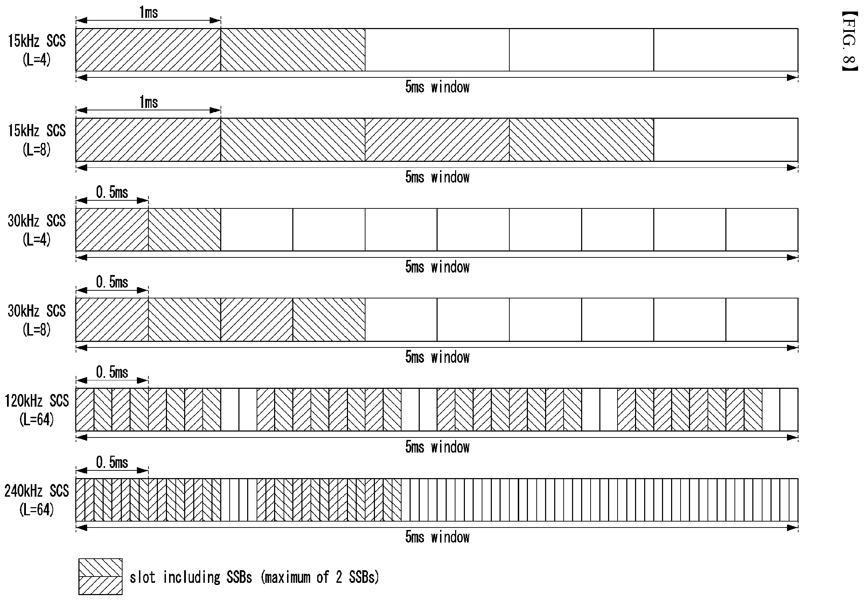

FIG. 8 is a conceptual diagram illustrating a first exemplary embodiment of SSB burst configuration.

Referring to FIG. 8, in a transmission procedure of SSBs (e.g., SSB burst) in radio resources to which a 120 kHz SCS is applied, the base station may transmit SSBs in 8 consecutive slots. In a transmission procedure of SSBs in radio resources to which s 240 kHz SCS is applied, the base station may transmit SSBs in 16 consecutive slots. In the radio resources to which the 120kHz SCS or 240kHz SCS is applied, a gap for UL transmission may be configured.

The RMSI may be obtained by performing an operation to obtain configuration information of a CORESET from the SS/PBCH block (e.g., PBCH), an operation of detecting a PDCCH based on the configuration information of the CORESET, an operation to obtain scheduling information of a PDSCH from the PDCCH, and an operation to receive the RMSI on the PDSCH. A transmission resource of the PDCCH may be configured by the configuration information of the CORESET. A mapping patter of the RMSI CORESET pattern may be defined as follows. The RMSI CORESET may be a CORESET used for transmission and reception of the RMSI.

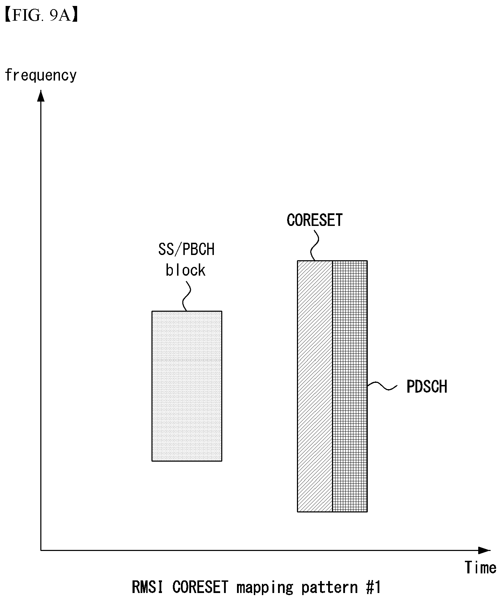

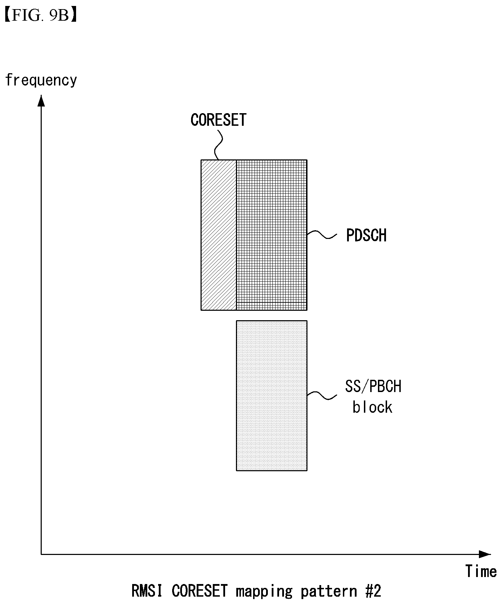

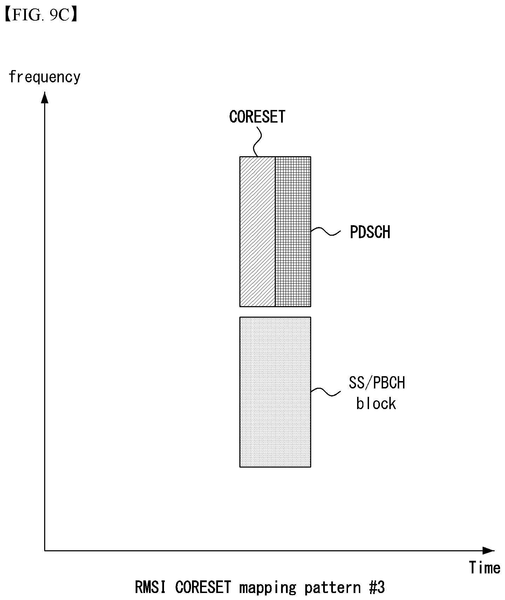

FIG. 9A is a conceptual diagram illustrating an RMSI CORESET mapping pattern #1 in a communication system, FIG. 9B is a conceptual diagram illustrating an RMSI CORESET mapping pattern #2 in a communication system, and FIG. 9C is a conceptual diagram illustrating an RMSI CORESET mapping pattern #3 in a communication system.

Referring to FIGS. 9A to 9C, one RMSI CORESET mapping pattern among the RMSI CORESET mapping patterns #1 to #3 may be used, and a detailed configuration according to the one RMSI CORESET mapping pattern may be determined. In the RMSI CORESET mapping pattern #1, the SS/PBCH block, the CORESET (i.e., RMSI CORESET), and the PDSCH (i.e., RMSI PDSCH) may be configured in a TDM scheme. The RMSI PDSCH may mean the PDSCH through which the RMSI is transmitted. In the RMSI CORESET mapping pattern #2, the CORESET (i.e., RMSI CORESET) and the PDSCH (i.e., RMSI PDSCH) may be configured in a TDM scheme, and the PDSCH (i.e., RMSI PDSCH) and the SS/PBCH block may be configured in a frequency division multiplexing (FDM) scheme. In the RMSI CORESET mapping pattern #3, the CORESET (i.e., RMSI CORESET) and the PDSCH (i.e., RMSI PDSCH) may be configured in a TDM scheme, and the CORESET (i.e., RMSI CORESET) and the PDSCH (i.e., RMSI PDSCH) may be multiplexed with the SS/PBCH block in a FDM scheme.

In the frequency band of 6GHz or below, only the RMSI CORESET mapping pattern #1 may be used. In the frequency band of 6GHz or above, all of the RMSI CORESET mapping patterns #1, #2, and #3 may be used. The numerology of the SS/PBCH block may be different from that of the RMSI CORESET and the RMSI PDSCH. Here, the numerology may be a subcarrier spacing. In the RMSI CORESET mapping pattern #1, a combination of all numerologies may be used. In the RMSI CORESET mapping pattern #2, a combination of numerologies (120kHz, 60kHz) or (240kHz, 120kHz) may be used for the SS/PBCH block and the RMSI CORESET/PDSCH. In the RMSI CORESET mapping pattern #3, a combination of numerologies (120kHz, 120kHz) may be used for the SS/PBCH block and the RMSI CORESET/PDSCH.

One RMSI CORESET mapping pattern may be selected from the RMSI CORESET mapping patterns #1 to #3 according to the combination of the numerology of the SS/PBCH block and the numerology of the RMSI CORESET/PDSCH. The configuration information of the RMSI CORESET may include Table A and Table B. Table A may represent the number of resource blocks (RBs) of the RMSI CORESET, the number of symbols of the RMSI CORESET, and an offset between an RB (e.g., starting RB or ending RB) of the SS/PBCH block and an RB (e.g., starting RB or ending RB) of the RMSI CORESET. Table B may represent the number of search space sets per slot, an offset of the RMSI CORESET, and an OFDM symbol index in each of the RMSI CORESET mapping patterns. Table B may represent information for configuring a monitoring occasion of the RMSI PDCCH. Each of Table A and Table B may be composed of a plurality of sub-tables. For example, Table A may include sub-tables 13-1 to 13-8 defined in the technical specification (TS) 38.213, and Table B may include sub-tables 13-9 to 13-13 defined in the TS 38.213. The size of each of Table A and Table B may be 4 bits.

In the NR system, a PDSCH may be mapped to the time domain according to a PDSCH mapping type A or a PDSCH mapping type B. The PDSCH mapping types A and B may be defined as Table 5 below.

**[Table 5]**

| | **Normal CP** | | | **Extended CP** | | |
|---|---|---|---|---|---|---|
| **PDSCH mapping type** | **S** | **L** | **S+L** | **S** | **L** | **S+L** |
| Type A | {0, 1,2,3 } (Note 1) | {3,...,14} | {3,...,14} | {0, 1,2,3 } (Note 1) | {3,...,12} | {3,...,12} |
| Type B | {0,...,12} | {2,4,7} | {2,...,14} | {0,...,10} | {2,4,6} | {2,...,12} |
| Note 1: S=3 is applicable only if *dmrs-TypeA-Position =* 3 | | | | | | |

The type A (i.e., PDSCH mapping type A) may be slot-based transmission. When the type A is used, a position of a start symbol of a PDSCH may be configured to one of {0, 1, 2, 3}. When the type A and a normal CP are used, the number of symbols constituting the PDSCH (e.g., the duration of the PDSCH) may be configured to one of 3 to 14 within a range not exceeding a slot boundary. The type B (i.e., PDSCH mapping type B) may be non-slot-based transmission. When the type B is used, a position of a start symbol of a PDSCH may be configured to one of 0 to 12. When the type B and the normal CP are used, the number of symbols constituting the PDSCH (e.g., the duration of the PDSCH) may be configured to one of {2, 4, 7} within a range not exceeding a slot boundary. A DMRS (hereinafter, referred to as 'PDSCH DMRS') for demodulation of the PDSCH (e.g., data) may be determined by the PDSCH mapping type (e.g., type A or type B) and an ID indicating the length. The ID may be defined differently according to the PDSCH mapping type.

Meanwhile, NR-unlicensed (NR-U) is being discussed in the NR standardization meeting. The NR-U system may increase network capacity by improving the utilization of limited frequency resources. The NR-U system may support operation in an unlicensed band (e.g., unlicensed spectrum).

In the NR-U system, the terminal may determine whether a signal is transmitted from a base station based on a discovery reference signal (DRS) received from the corresponding base station in the same manner as in the general NR system. In the NR-U system in a Stand-Alone (SA) mode, the terminal may acquire synchronization and/or system information based on the DRS. In the NR-U system, the DRS may be transmitted according to a regulation of the unlicensed band (e.g., transmission band, transmit power, transmission time, etc.). For example, according to Occupied Channel Bandwidth (OCB) regulations, signals may be configured and/or transmitted to occupy 80% of the total channel bandwidth (e.g., 20 MHz).

In the NR-U system, a communication node (e.g., base station, terminal) may perform a Listen Before Talk (LBT) procedure before transmitting a signal and/or a channel for coexistence with another system. The signal may be a synchronization signal, a reference signal (e.g., DRS, DMRS, channel state information (CSI)-RS, phase tracking (PT)-RS, sounding reference signal (SRS)), or the like. The channel may be a downlink channel, an uplink channel, a sidelink channel, or the like. In exemplary embodiments, a signal may mean the 'signal', the 'channel', or the 'signal and channel'. The LBT procedure may be an operation for checking whether a signal is transmitted by another communication node. If it is determined by the LBT procedure that there is no transmission signal (e.g., when the LBT procedure is successful), the communication node may transmit a signal in the unlicensed band. If it is determined by the LBT procedure that a transmission signal exists (e.g., when the LBT fails), the communication node may not be able to transmit a signal in the unlicensed band. The communication node may perform a LBT procedure according to one of various categories before transmission of a signal. The category of LBT may vary depending on the type of the transmission signal.

Meanwhile, NR vehicle-to-everything (V2X) communication technology is being discussed in the NR standardization meeting. The NR V2X communication technology may be a technology that supports communication between vehicles, communication between a vehicle and an infrastructure, communication between a vehicle and a pedestrian, and the like based on device-to-device (D2D) communication technologies. Techniques for reducing power consumption and improving reliability are being discussed for NR V2C communication.

The NR V2X communication (e.g., sidelink communication) may be performed according to three transmission schemes (e.g., unicast scheme, broadcast scheme, groupcast scheme). When the unicast scheme is used, a PC5-RRC connection may be established between a first terminal (e.g. transmitting terminal that transmits data) and a second terminal (e.g., receiving terminal that receives data), and the PC5-RRC connection may refer to a logical connection for a pair between a source ID of the first terminal and a destination ID of the second terminal. The first terminal may transmit data (e.g., sidelink data) to the second terminal. When the broadcast scheme is used, the first terminal may transmit data to all terminals. When the groupcast scheme is used, the first terminal may transmit data to a group (e.g., groupcast group) composed of a plurality of terminals. In SL communication (e.g., SL-U communication), a transmitting terminal may mean a terminal transmitting data, and a receiving terminal may mean a terminal receiving the data.

When the unicast scheme is used, the second terminal may transmit feedback information (e.g., acknowledgment (ACK) or negative ACK (NACK)) to the first terminal in response to data received from the first terminal. In the exemplary embodiments below, the feedback information may be referred to as a 'HARQ-ACK', 'feedback signal', a 'physical sidelink feedback channel (PSFCH) signal', or the like. When ACK is received from the second terminal, the first terminal may determine that the data has been successfully received at the second terminal. When NACK is received from the second terminal, the first terminal may determine that the second terminal has failed to receive the data. In this case, the first terminal may transmit additional information to the second terminal based on an HARQ scheme. Alternatively, the first terminal may improve a reception probability of the data at the second terminal by retransmitting the same data to the second terminal.

When the broadcast scheme is used, a procedure for transmitting feedback information for data may not be performed. For example, system information may be transmitted in the broadcast scheme, and the terminal may not transmit feedback information for the system information to the base station. Therefore, the base station may not identify whether the system information has been successfully received at the terminal. To solve this problem, the base station may periodically broadcast the system information.

When the groupcast scheme is used, a procedure for transmitting feedback information for data may not be performed. For example, necessary information may be periodically transmitted in the groupcast scheme, without the procedure for transmitting feedback information. However, when the candidates of terminals participating in the groupcast scheme-based communication and/or the number of the terminals participating in that is limited, and the data transmitted in the groupcast scheme is data that should be received within a preconfigured time (e.g., data sensitive to delay), it may be necessary to transmit feedback information also in the groupcast sidelink communication. The groupcast sidelink communication may mean sidelink communication performed in the groupcast scheme. When the feedback information transmission procedure is performed in the groupcast sidelink communication, data can be transmitted and received efficiently and reliably.

In the groupcast sidelink communication, two HARQ-ACK feedback schemes (i.e., transmission procedures of feedback information) may be supported. When the number of receiving terminals in a sidelink group is large and a service scenario 1 is supported, some receiving terminals belonging to a specific range within the sidelink group may transmit NACK through a PSFCH when data reception fails. This scheme may be a groupcast HARQ-ACK feedback option 1. In the service scenario 1, instead of all the receiving terminals in the sidelink group, it may be allowed for some receiving terminals belonging to a specific range to perform reception in a best-effort manner. The service scenario 1 may be an extended sensor scenario in which some receiving terminals belonging to a specific range need to receive the same sensor information from a transmitting terminal. In exemplary embodiments, the transmitting terminal may refer to a terminal transmitting data, and the receiving terminal may refer to a terminal receiving data.

When the number of receiving terminals in the sidelink group is limited and a service scenario 2 is supported, each of all the receiving terminals belonging to the sidelink group may report HARQ-ACK for data individually through a separate PSFCH. This scheme may be a groupcast HARQ-ACK feedback option 2. In the service scenario 2, since PSFCH resources are sufficient, the transmitting terminal may perform monitoring on HARQ-ACK feedbacks of all the receiving terminals belonging to the sidelink group, and data reception may be guaranteed at all the receiving terminals belonging to the sidelink group.

As in broadcast sidelink communication, data may be transmitted and received without a HARQ-ACK feedback procedure in unicast sidelink communication and groupcast sidelink communication. In this case, in order to increase a probability of receiving the data, a transmitting terminal may retransmit the data a preset number of times.

In all transmission schemes (e.g., unicast transmission, groupcast transmission, and broadcast transmission), whether a HARQ-ACK feedback procedure is applied may be statically or semi-statically configured to the terminal(s) by signaling (e.g., system information signaling, PC5-RRC signaling, UE-specific RRC signaling, control information signaling). In sidelink communication, HARQ-ACK feedback information may be transmitted on a PSFCH. If reception of a PSSCH is successful, a receiving terminal may transmit ACK for the PSSCH (e.g., data) on the PSFCH. If reception of the PSSCH fails, the receiving terminal may transmit NACK for the PSSCH (e.g., data) on the PSFCH. The PSFCH may be a channel for reporting ACK/NACK information (e.g., HARQ-ACK feedback) to the transmitting terminal. A resource region (e.g., PSFCH resource region) for PSFCH transmission (e.g., transmission of HARQ-ACK feedback) may be preconfigured within a specific resource pool. The PSFCH (e.g., PSFCH resource or PSFH resource region) may be configured periodically. A PSFCH periodicity for the PSFCH resource may be k slots (e.g., logical sidelink (SL) slots). k may be a natural number. For example, k may be 1, 2, or 4.

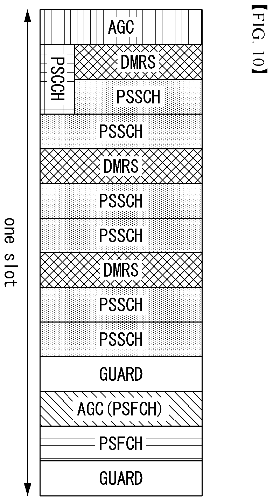

FIG. 10 is a conceptual diagram illustrating a first exemplary embodiment of configuration of a slot in which a PSFCH is configured.

Referring to FIG. 10, a PSFCH (e.g., HARQ-ACK feedback) may be repeatedly transmitted in two symbols (e.g., two OFDM symbols) within a slot (e.g., SL slot). The first symbol among two symbols in which the PSFCH is transmitted may be used for automatic gain control (AGC) for correct PSFCH receive power level adjustment.

The PSFCH may be transmitted within a frequency resource region preconfigured by system information. In this case, the frequency resource region for PSFCH transmission may be indicated (e.g., signaled) in form of a bitmap within the resource pool. The receiving terminal may implicitly select a location of the frequency resource region for PSFCH transmission based on indexes of a slot and a subchannel in which a PSSCH is received. The receiving terminal may identify the number of resource blocks (RBs) and the number of PSFCH resources multiplexable based on cyclic shifts of a PSFCH sequence within the frequency resource region. The receiving terminal may implicitly select a PSFCH index for PSFCH resource(s) based on a source identifier (ID) and a member ID. The source ID may be a physical layer source ID. The source ID may be an ID of a transmitting terminal that has transmitted the PSSCH.

The member ID may be used in the groupcast HARQ-ACK feedback option 2. When the groupcast HARQ-ACK feedback option 2 is applied, each of all receiving terminals within a group may individually transmit a HARQ-ACK feedback for SL data through a separate PSFCH (e.g., PSFCH resource). In a case other than the above-described exemplary embodiment, the member ID may be set to 0.

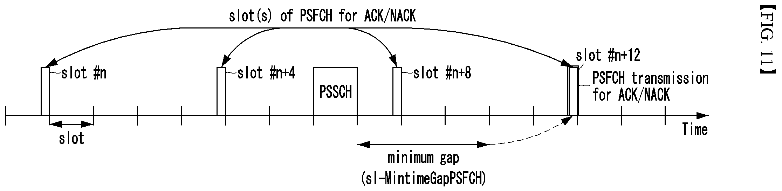

FIG. 11 is a conceptual diagram illustrating a first exemplary embodiment of a PSFCH for ACK/NACK transmission.

Referring to FIG. 11, a transmission time of a PSFCH may be the first slot (e.g., PSFCH slot) in which PSFCH transmission is possible after a preset time (e.g., *sl-MinTimeGapPSFCH*) from a reception time of a corresponding PSSCH. The PSFCH slot may be a slot capable of transmitting a PSFCH and/or a slot in which a PSFCH is configured. *sl-MinTimeGapPSFCH* may be set in consideration of a time required for processing the PSSCH after reception of the PSSCH and a time required for preparing for ACK/NACK (e.g., HARQ-ACK feedback) depending on whether reception of the PSSCH is successful. *sl-MinTimeGapPSFCH* may be set to 2 or 3 slots. The terminal (e.g., receiving terminal) may transmit the PSFCH in a slot #n+12, which is a slot capable of PSFCH transmission, after *sl-MinTimeGapPSFCH* (e.g., 3 slots) from a reception time of the PSSCH. n may be an integer greater than or equal to 0. In the present disclosure, the reception time may mean a reception start time and/or a reception end time, and the transmission time may mean a transmission start time and/or a transmission end time. The time may mean a timing and/or duration.

Data reliability at the receiving terminal may be improved by appropriately adjusting a transmit power of the transmitting terminal according to a transmission environment. Interference to other terminals may be mitigated by appropriately adjusting the transmit power of the transmitting terminal. Energy efficiency can be improved by reducing unnecessary transmit power. A power control scheme may be classified into an open-loop power control scheme and a closed-loop power control scheme. In the open-loop power control scheme, the transmitting terminal may determine the transmit power in consideration of configuration, a measured environment, etc. In the closed-loop power control scheme, the transmitting terminal may determine the transmit power based on a transmit power control (TPC) command received from the receiving terminal.

It may be difficult due to various causes including a multipath fading channel, interference, and the like to predict a received signal strength at the receiving terminal. Accordingly, the receiving terminal may adjust a receive power level (e.g., receive power range) by performing an automatic gain control (AGC) operation to prevent a quantization error of the received signal and maintain a proper receive power. In the communication system, the terminal may perform the AGC operation using a reference signal received from the base station. However, in the sidelink communication (e.g., V2X communication), the reference signal may not be transmitted from the base station. That is, in the sidelink communication, communication between terminals may be performed without the base station. Therefore, it may be difficult to perform the AGC operation in the sidelink communication. In the sidelink communication, the transmitting terminal may first transmit a signal (e.g., reference signal) to the receiving terminal before transmitting data, and the receiving terminal may adjust a receive power range (e.g., receive power level) by performing an AGC operation based on the signal received from the transmitting terminal. Thereafter, the transmitting terminal may transmit sidelink data to the receiving terminal. The signal used for the AGC operation may be a signal duplicated from a signal to be transmitted later or a signal preconfigured between the terminals.

A time period required for the ACG operation may be 15 µs. When a subcarrier spacing of 15 kHz is used in the NR system, a time period (e.g., length) of one symbol (e.g., OFDM symbol) may be 66.7 µs. When a subcarrier spacing of 30 kHz is used in the NR system, a time period of one symbol (e.g., OFDM symbol) may be 33.3 µs. In the following exemplary embodiments, a symbol may mean an OFDM symbol. That is, a time period of one symbol may be twice or more than a time period required for the ACG operation.

For sidelink communication, it may be necessary to transmit a data channel for data transmission and a control channel including scheduling information for data resource allocation. In sidelink communication, the data channel may be a physical sidelink shared channel (PSSCH), and the control channel may be a physical sidelink control channel (PSCCH). The data channel and the control channel may be multiplexed in a resource domain (e.g., time and frequency resource domains).

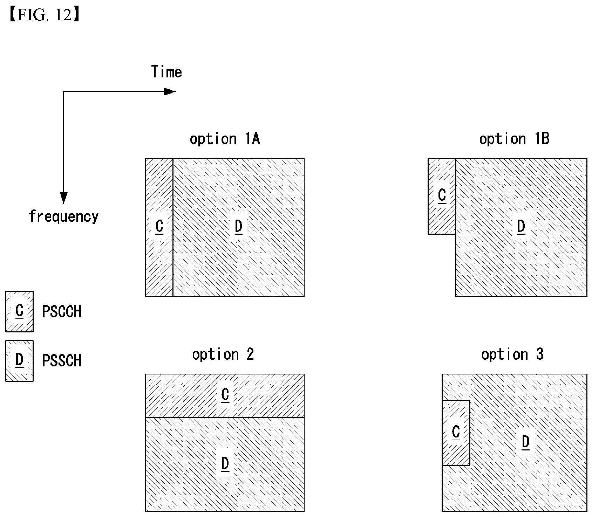

FIG. 12 is a conceptual diagram illustrating exemplary embodiments of a method for multiplexing a control channel and a data channel in sidelink communication.

Referring to FIG. 12, sidelink communication may support an option 1A, an option 1B, an option 2, and an option 3. When the option 1A and/or the option 1B is supported, a control channel and a data channel may be multiplexed in the time domain. When the option 2 is supported, a control channel and a data channel may be multiplexed in the frequency domain. When the option 3 is supported, a control channel and a data channel may be multiplexed in the time and frequency domains. The sidelink communication may basically support the option 3.

In the sidelink communication (e.g., NR-V2X sidelink communication), a basic unit of resource configuration may be a subchannel. The subchannel may be defined with time and frequency resources. For example, the subchannel may be composed of a plurality of symbols (e.g., OFDM symbols) in the time domain, and may be composed of a plurality of resource blocks (RBs) in the frequency domain. The subchannel may be referred to as an RB set. In the subchannel, a data channel and a control channel may be multiplexed based on the option 3.

In the sidelink communication (e.g., NR-V2X sidelink communication), transmission resources may be allocated based on a mode 1 or a mode 2. When the mode 1 is used, a base station may allocate sidelink resource(s) for data transmission within a resource pool to a transmitting terminal, and the transmitting terminal may transmit data to a receiving terminal using the sidelink resource(s) allocated by the base station. Here, the transmitting terminal may be a terminal that transmits data in sidelink communication, and the receiving terminal may be a terminal that receives the data in sidelink communication.

When the mode 2 is used, a transmitting terminal may autonomously select sidelink resource(s) to be used for data transmission by performing a resource sensing operation and/or a resource selection operation within a resource pool. The base station may configure the resource pool for the mode 1 and the resource pool for the mode 2 to the terminal(s). The resource pool for the mode 1 may be configured independently from the resource pool for the mode 2. Alternatively, a common resource pool may be configured for the mode 1 and the mode 2.

When the mode 1 is used, the base station may schedule a resource used for sidelink data transmission to the transmitting terminal, and the transmitting terminal may transmit sidelink data to the receiving terminal by using the resource scheduled by the base station. Therefore, a resource conflict between terminals may be prevented. When the mode 2 is used, the transmitting terminal may select an arbitrary resource by performing a resource sensing operation and/or resource selection operation, and may transmit sidelink data by using the selected arbitrary resource. Since the above-described procedure is performed based on an individual resource sensing operation and/or resource selection operation of each transmitting terminal, a conflict between selected resources may occur.

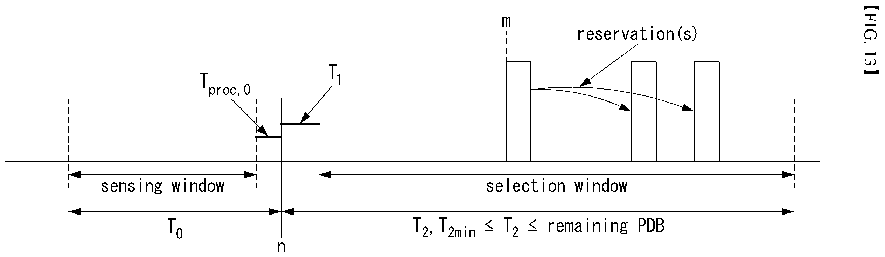

FIG. 13 is a conceptual diagram illustrating a first exemplary embodiment of a resource selection operation.

Referring to FIG. 13, a terminal (e.g., transmitting terminal) may perform a resource sensing operation within a sensing window, and may perform a resource selection operation on resource(s) (e.g., candidate resource(s)) sensed within the selection window. When the resource selection operation is triggered in a time n, the terminal may select suitable resource(s) within the selection window (e.g., a period from a time n+T₁ to a time n+T₂) based on a result of the sensing within the sensing window (e.g., a period from a time n-T₀ to a time n-T_{proc,0}).

Based on the result of the resource sensing operation, the terminal may exclude candidate resource(s) that do not satisfy a condition within the selection window. In other words, the terminal may determine the remaining candidate resources excluding the candidate resource(s) that are not suitable from all candidate resources. When a ratio of the remaining candidate resources among all resources within the selection window is less than a reference ratio, the terminal may relax the condition for excluding the candidate resource(s). For example, the terminal may increase a reference signal received power (RSRP) threshold, which is the condition for excluding candidate resource(s), by 3dB. Thereafter, the terminal may perform the resource selection operation again. The reference ratio may be preset to one of 20%, 35%, or 50% for each priority. When the ratio of the remaining candidate resources is greater than or equal to the reference ratio, the terminal may randomly select final resource(s) to be used for SL transmission among the remaining candidate resources. The terminal may perform SL transmission using the final resource(s).

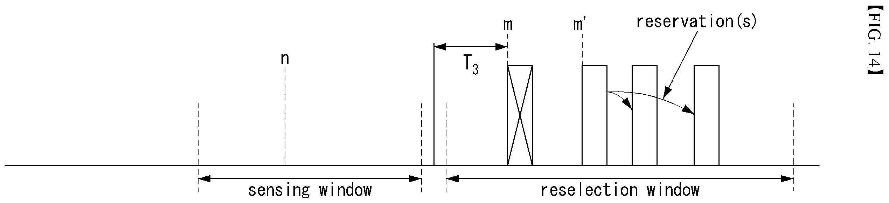

FIG. 14 is a conceptual diagram illustrating a first exemplary embodiment of a resource reselection operation.

Referring to FIG. 14, after the resource selection operation, the terminal may perform a resource reselection operation in consideration of aperiodic data transmission or the like. After performing the operations shown in FIG. 13, the terminal may perform the resource reselection operation by additionally considering a result of sensing at a time m-T₃ before actual SL transmission. The resource reselection operation may be performed within a reselection window. The terminal may further determine suitability of resource(s) reserved at the time m. When it is determined that the resource(s) reserved in the time m is suitable, the terminal may perform SL transmission using the reserved resource(s). When it is determined that the resource(s) reserved at the time m is not suitable, the terminal may reselect resource(s) for SL transmission and perform SL transmission using the reselected resource(s).

When an independent SL carrier is not configured for SL communication, some UL resources among UL resources may be configured as SL resources by an SL resource pool configuration procedure. A bitmap may be repeatedly applied to the remaining slot(s) excluding slot(s) in which at least X or more UL symbols are not configured and slot(s) in which a sidelink (S)-SSB is transmitted among slots within a specific period. X may be a natural number. The bitmap may indicate slot(s) used as SL resources. For example, slot(s) corresponding to bit(s) set to 1 among bits in the bitmap may be used as SL resources.

A case in which a 15 kHz subcarrier spacing (SCS) is applied and X or more UL symbols are configured in all slots may be assumed. When there are 10240 slots available within a direct frame number (DFN), a transmission periodicity of the S-SSB is 160 ms, and there are 2 slots used for S-SSB transmission in each S-SSB transmission period, the number of slots used for S-SSB transmission within a DFN may be 128. A bitmap for configuring SL time resources may include 10 bits. When the bitmap (e.g., bitmap including 10 bits) is repeatedly applied to the remaining 10112 slots excluding 128 slots used for S-SSB transmission among 10240 slots, there may be two slots (e.g., reserved slots) to which the bitmap is not applied. It may be necessary to exclude the two reserved slots. When excluding the two reserved slots from 10112 slots, 10110 slots may remain. The bitmap (e.g., bitmap including 10 bits) may be repeatedly applied 1011 times to 10110 slots. When the bitmap is set to '1111000000' and slots corresponding to bits set to 1 are used as SL resources, 4044 slots may be configured as SL resources within the DFN. In other words, 4044 slots among 10240 slots may be used for SL communication by configuring the SL resource pool.

The sidelink communication system supporting Release-16 may be designed for terminals (e.g., vehicle-mounted terminals, vehicle UEs (V-UEs)) that do not have restrictions on battery capacity. Therefore, a power saving issue may not be greatly considered in resource sensing/selection operations for such the terminals. However, in order to perform sidelink communication with terminals having restrictions on battery capacity in the sidelink communication system supporting Release-17 (e.g., a terminal carried by a pedestrian, a terminal mounted on a bicycle, a terminal mounted on a motorcycle, a pedestrian UE (P-UE)), power saving methods will be required. In the present disclosure, a 'V-UE' may refer to a terminal that has no significant restrictions on battery capacity, a 'P-UE' may refer to a terminal with restrictions on battery capacity, and a 'resource sensing/selection operation' may refer to a resource sensing operation and/or a resource selection operation. The resource sensing operation may refer to a partial sensing operation or a full sensing operation. The resource selection operation may refer to a random selection operation. In addition, in the present disclosure, an 'operation of a terminal' may be interpreted as an 'operation of a V-UE' and/or 'operation of a P-UE'.

For power saving in the LTE V2X, a partial sensing operation and/or a random selection operation has been introduced. When the partial sensing operation is supported, the terminal may perform resource sensing operations in partial periods instead of an entire period within a sensing window, and may select a resource based on a result of the partial sensing operation. According to such the operation, power consumption of the terminal may be reduced.

In the Release-14 LTE V2X, only periodic data transmission and reception operations may be possible. In the Release-14 LTE V2X, the terminal may arbitrarily select candidate slots within a resource selection period (e.g., selection window) in consideration of a preset minimum number, and perform a partial sensing operation in consideration of a periodicity of k×100 ms. k may be signaled by a bitmap (e.g., bitmap including 10 bits). k may be determined according to a position of a bit included in the bitmap. For example, 10 bits included in the bitmap may respectively correspond to values from 1 to 10 from the MSB, and the periodicity may be determined based on a value corresponding to a bit set to 1. The value corresponding to the bit set to 1 may be k.

When the MSB is set to 1 in the bitmap, k may be 1. In this case, the terminal may perform a partial sensing operation in consideration of a periodicity of 100 ms (= 1×100 ms). When a bit next to the MSB in the bitmap is set to 1, k may be 2. In this case, the terminal may perform a partial sensing operation in consideration of a periodicity of 200 ms (= 2×100 ms). When the LSB is set to 1 in the bitmap, k may be 10. In this case, the terminal may perform a partial sensing operation in consideration of a periodicity of 1000 ms (= 10 × 100 ms).

In the Release-14 LTE V2X, the periodicity (e.g., the periodicity of partial sensing operation) may be set to 20 ms or 50 ms. A periodicity of 20 ms or 50 ms may not be supported in a resource pool for a P-UE. In the NR communication system, a shorter periodicity may be supported in addition to {0, 100 ms, 200 ms, ... , 1000 ms}. The short periodicity may be {1 ms, 2 ms, ... , 99 ms}. Up to 16 periodicities may be selected from the resource pool, and the selected periodicities may be preconfigured to the terminal. The terminal may perform the resource sensing operation and/or the resource (re)selection operation using one or more of the configured periodicities. When a random selection operation is supported, the terminal may randomly select a resource without performing a resource sensing operation. Alternatively, the random selection operation may be performed together with the resource sensing operation. For example, the terminal may determine resources by performing the resource sensing operation, and may select resource(s) by performing the random selection operation within the determined resources.

In the LTE V2X supporting Release-14, a resource pool in which the partial sensing operation and/or random selection operation can be performed may be configured independently of a resource pool in which the full sensing operation can be performed. A resource pool capable of performing the random selection operation, a resource pool capable of performing the partial sensing operation, and a resource pool capable of performing the full sensing operation may be independently configured. In other words, a random selection operation, a partial sensing operation, or both a random selection operation and a partial sensing operation may be configured for each resource pool. When both a random selection operation and a partial sensing operation are configured for a resource pool, the terminal may select one operation among the random selection operation and the partial sensing operation, select a resource by performing the selected operation, and use the selected resource to perform SL communication.

In the LTE V2X supporting Release-14, sidelink (SL) data may be periodically transmitted based on a broadcast scheme. In the NR communication system, SL data may be transmitted based on a broadcast scheme, multicast scheme, groupcast scheme, or unicast scheme. In addition, in the NR communication system, SL data may be transmitted periodically or aperiodically. A transmitting terminal may transmit SL data to a receiving terminal, and the receiving terminal may transmit a HARQ feedback (e.g., acknowledgement (ACK) or negative ACK (NACK)) for the SL data to the transmitting terminal on a PSFCH. In the present disclosure, a transmitting terminal may refer to a terminal transmitting SL data, and a receiving terminal may refer to a terminal receiving the SL data.

A terminal having reduced capability (hereinafter, referred to as 'RedCap terminal') may operate in a specific usage environment. The capability of the RedCap terminal may be lower than capability of a new radio (NR) normal terminal, and may be higher than those of an LTE-machine type communication (LTE-MTC) terminal, a narrow band (NB)-Internet of things (IoT) terminal, and a low power wide area (LPWA) terminal. For example, a terminal (e.g., surveillance camera) requiring a high data rate and not high latency condition and/or a terminal (e.g., wearable device) requiring a non-high data rate, high latency condition, and high reliability may exist. In order to support the above-described terminals, the maximum carrier bandwidth in FR1 may be reduced from 100 MHz to 20 MHz, and the maximum carrier bandwidth in FR2 may be reduced from 400 MHz to 100 MHz. The number of reception antennas of the RedCap terminal may be smaller than the number of reception antennas of the NR normal terminal. When the carrier bandwidth and the number of reception antennas are reduced, reception performance at the RedCap terminal may decrease, and accordingly, the coverage of the RedCap terminal may decrease.

The communication system (e.g., NR system) may operate in a frequency band higher than a 52.6 GHz frequency band. As a frequency of the frequency band in which the communication system operates increases, a frequency offset error and a phase noise may increase. The use of a large SCS may be necessary for robust operations in such a environment. In an FR2 band, a 60 kHz SCS and/or a 120 kHz SCS may be supported, and a 480 kHz SCS and/or a 960 kHz SCS may be additionally supported. In addition, design of physical layer signals and channels and physical layer procedures according to the new SCSs may be required. Regarding an initial access procedure, 120 kHz SSBs and/or 240 kHz SSBs may be supported in an FR2 band, and 480 kHz SSBs and/or 960 kHz SSBs may be additionally supported. Here, the 120 kHz SSB may refer to an SSB transmitted in a radio resource to which the 120 kHz SCS is applied, and the 240 kHz SSB may refer to an SSB transmitted in a radio resource to which the 240 kHz SCS is applied. A method for configuring an initial BWP and an SSB burst set pattern for supporting the new SCSs may be required.

In the Release-18, techniques for carrier aggregation (CA) for an improved transmission rate of data on a sidelink, support for operations in an unlicensed spectrum, performance improvement in an FR2 licensed spectrum, and/or co-channel coexistence between LTE SL and NR SL may be discussed.

For sidelink (SL) communication in an unlicensed band (e.g., unlicensed spectrum), as in the NR-U system, a transmission band, transmission power, and/or transmission time according to use of an unlicensed band should be complied with regulation(s). Design of sidelink signals and/or channels suitable for the above regulation(s) may be required. In the present disclosure, SL communication in an unlicensed band may be referred to as 'SL-unlicensed (SL-U) communication'. In the present disclosure, SL communication may refer to 'SL-U communication', a SL communication method may be applied to SL-U communication, and an NR-U communication method may be applied to SL-U communication. In the existing SL system, one SL BWP may be configured, and SL communication may be performed based on a plurality of resource pools configured within the one SL BWP. One SL BWP for SL-U communication may be configured, and the SL-U communication may be performed based on a plurality of resource pools configured within the one SL BWP.

Transmission of signals and/or channels in SL-U communication should satisfy OCB regulations. Design of SL channels (e.g., PSCCH, PSSCH, and/or PSFCH) in consideration of the OCB regulations may be required. In order to satisfy the OCB regulations in NR-U communication, resource blocks (RBs) for data transmission may be configured to have an interlace (or interlaced) structure. When the interlaced structure (e.g., interlaced RB structure) is used, RBs may be configured to have regular intervals in the frequency domain. In this case, resource allocation for data transmission may be signaled through a combination of a start interlace index (e.g., a start RB interlace index) and an interlace length. The RB may refer to a physical resource block (PRB).

In SL-U communication, a subchannel may be configured to have an interlaced RB structure. In this case, the OCB regulations may be satisfied. A subchannel including K interlaces may be configured. K may be a natural number greater than or equal to 1. K (e.g., a value of K) may be configured to a terminal through signaling (e.g., system information, PC5-RRC signaling, UE-specific RRC signaling, and/or control information). K may be configured statically, semi-statically, or dynamically.

When one subchannel includes one interlace (e.g., one RB interlace) (e.g., when K is 1), an interlace index may be the same as a subchannel index. In this case, a separate interlace index may not be required. In the present disclosure, an interlace may mean an RB interlace. When one subchannel includes two or more interlaces (e.g., when K exceeds 1), an interlace index may be different from a subchannel index. In this case, a separate interlace index may be defined. An interlace may include one or more RBs. RBs included in an interlace may have an interlaced structure.

In an unlicensed band, the regulation(s) may be defined in units of 20 MHz bands. In the NR-U system, RBs corresponding to a 20 MHz band may be defined as an RB set. One BWP may include a plurality of RB sets. When a communication node desires to simultaneously transmit a signal using a plurality of RB sets in an unlicensed band, a channel access method for the transmission operation may be applied differently depending on DL and UL. In NR-U DL communication, a base station may perform a type 1 channel access operation for each of a plurality of RB sets, and may perform transmission when the type 1 channel access operation succeeds. The above procedure may be a type A channel access procedure. In NR-U DL communication, a base station may perform the type 1 channel access operation for one RB set among a plurality of RB sets, and may perform a sensing operation in the remaining RB set(s) during a minimum sensing period (e.g., 25 us). When the type 1 channel access operation and the sensing operation succeed, the base station may perform a transmission operation. The above procedure may be a type B channel access procedure.

In NR-U UL communication, a terminal may perform the type 1 channel access operation in all of a plurality of channels, and when the type 1 channel access operation (e.g., LBT operation) succeeds in all of the plurality of channels, the terminal may transmit data. When the LBT operation fails in at least one of the plurality of channels, the terminal may not transmit data. The channel access procedure in NR-U UL communication may be used for general transmission (e.g., PSCCH and/or PSSCH transmission) in SL-U communication. The channel access procedure (e.g., Type A or Type B channel access) in NR-U DL communication may be used for transmission of a specific signal and/or channel (e.g., S-SSB and/or PSFCH transmission) in SL-U communication.

When a plurality of RB sets is configured, a guard band may be configured between the RB sets in consideration of an operation in a single RB set. When a plurality of RB sets exists and an LBT operation is successful for some RB set(s) among the plurality of RB sets, data may be transmitted in the some RB set(s). In this case, in order to improve resource efficiency, transmission of the data may be performed in resources including resources within a guard band between RB sets in which the LBT operation is successful. Information (e.g., control information) indicating whether data transmission is performed in resources within a guard band between RB sets may be transmitted through signaling.

A receiving node (e.g., receiving terminal) may identify whether data transmission is performed in resources including resources within a guard band between RB sets by receiving the control information. For the above signaling operation, an RB set index of each of the plurality of RB sets may be configured. The control information may be transmitted on a control channel. The receiving node may not know in advance RB set(s) in which the LBT operation is successful among the plurality of RB sets. Accordingly, the receiving node may consider all possible combinations of the plurality of RB sets. In other words, the receiving node may perform a reception operation according to all possible combinations. In this case, the complexity of the receiving node may increase. Transmission of a control channel may be limited within each RB set, unlike transmission of a data channel.

The RB set(s), the type A channel access procedure in DL communication, the type B channel access procedure in DL communication, and/or the channel access procedure in UL communication may be applied to SL-U communication. It may be required to design channels (e.g., PSCCH, PSSCH, and/or PSFCH) considering the above procedure(s) applied in SL-U communication. When a channel and/or signal is transmitted through a plurality of RB sets in SL communication, a subchannel index may be configured as a combination of an interlace index and an RB set index, and may be configured for each RB set. For example, one or more subchannels may be configured within an RB set #0, and indexes of the one or more subchannels may be #0, #1, and the like. One or more subchannels may be configured within an RB set #1, and indexes of the one or more subchannels may be #0, #1, and the like. Each RB set may include one or more interlaces, and a subchannel belonging to each RB set may include one or more interlaces. Indexes of subchannels including interlace(s) having the same index(es) may be configured to be the same in RB sets. For example, an index of a subchannel including interlaces #0 and #1 in the RB set #0 and an index of a subchannel including interlaces #0 and #1 in the RB set #1 may be configured to be the same. When a PSSCH is transmitted through a plurality of subchannels, a PSCCH (e.g., PSCCH scheduling the PSSCH) may be transmitted in a preconfigured resource region within a subchannel having the lowest index. A PSCCH scheduling a PSSCH may refer to a PSCCH associated with the PSSCH.

A time resource of the preconfigured resource region may include 2 or 3 symbols. A frequency resource of the preconfigured resource region may include 10, 12, 15, 20, or 25 RBs. When a channel and/or signal is transmitted through a plurality of RB sets and a subchannel has an interlaced RB structure, a PSSCH may be transmitted through an interlace within a guard band between the RB sets, and a PSCCH (e.g., PSCCH scheduling the PSSCH) may be transmitted through a preconfigured resource region within interlace(s) corresponding to a subchannel having the lowest index. The PSCCH may not be transmitted through an interlace within a guard band between the RB sets.

A subchannel having the lowest index in a specific RB set among a plurality of RB sets may overlap a guard band between the plurality of RB sets. In this case, even when the subchannel overlapping with the guard band between the plurality of RB sets is a subchannel having the lowest index in the specific RB set, the terminal may not transmit a PSCCH in the corresponding subchannel, and may transmit a PSCCH in the next subchannel (e.g., subchannel having the next index). A PSCCH may be configured not to be transmitted through an interlace within a guard band between RB sets. The configuration may be performed through signaling (e.g., system information, PC5-RRC signaling, UE-specific signaling, and/or SCI).

Considering the complexity of the terminal, resources may be configured such that a PSCCH is transmitted in one RB set (e.g., RB set having the lowest index). Specifically, K interlaces included in a subchannel may be appropriately configured so that a resource region for PSCCH belongs to only one RB set. For example, when the number of RBs required for PSCCH transmission is 20 and the number of RBs included in one interlace within one RB set is less than 20, a subchannel may include two or more interlaces. In SL communication, control information may be classified into first-stage SCI and second-stage SCI. The first-stage SCI may be transmitted through a PSCCH, and the second-stage SCI may be transmitted through a PSSCH. When a PSSCH is transmitted through a plurality of RB sets, the second-stage SCI may be transmitted within a guard band between the RB sets. In other words, the second-stage SCI may be mapped within a guard band between the RB sets, transmission of the second-stage SCI may not be limited within one RB set, and the second-stage SCI may be transmitted in the same manner as data.

As another method, when second-stage SCI is transmitted on a PSSCH, transmission of the second-stage SCI may be limited within one RB set. In other words, the second-stage SCI may be transmitted in the same manner as the first-stage SCI. In the case that transmission of the second-stage SCI is limited within one RB set, identically or similarly to groupcast communication and/or broadcast communication, if configurations of RB sets between a plurality of terminals are different, the transmission of the second-stage SCI may be limited within a common resource region in which resource regions of all terminals overlap. In this case, information on RB set(s) in which a PSSCH is transmitted among the plurality of RB sets may be transmitted through SCI (e.g., first-stage SCI and/or second-stage SCI). The RB set(s) for PSSCH transmission may be indicated by a start RB set and the number of RB sets (e.g., the number of consecutive RB sets), and information on the start RB set and the number of RB sets may be signaled. Alternatively, the RB set(s) for PSSCH transmission may be indicated by a bitmap, and the bitmap may be signaled.

As yet another method, PSCCH transmission in SL-U communication may be performed based on the same or similar method as PSCCH transmission in NR-U communication. A PSCCH may be transmitted through preconfigured RB set(s). A PSCCH may be configured to be transmitted in some RB set(s) or all RB sets among a plurality of RB sets. In this case, a transmitting terminal may select RB set(s) in which an LBT operation is successful among the RB set(s) configured for PSCCH transmission, and may transmit a PSCCH in the selected RB set(s). A receiving terminal may perform a PSCCH monitoring operation in the configured RB set(s). When an LBT operation succeeds in a plurality of RB sets among the RB set(s) configured for PSCCH transmission, the transmitting terminal may select one RB set from among the plurality of RB sets, and transmit a PSCCH in the selected one RB set. Alternatively, the transmitting terminal may transmit a PSCCH in two or more RB sets or all RB sets among the plurality of RB sets in which the LBT operation is successful. When PSCCH transmission is performed in a plurality of RB sets, the same information may be repeatedly transmitted.

In SL communication, a terminal may determine whether other terminal(s) use resources by performing a sensing operation through SCI monitoring. When a plurality of RB sets is configured, some terminals may perform SL communication using one of the plurality of RB sets. A first terminal performing SL communication using a plurality of RB sets may transmit SCI (e.g., first-stage SCI and/or second-stage SCI) in a first RB set (e.g., RB set having the lowest index), and a second terminal may perform a sensing operation in an RB set (e.g., second RB set) other than the first RB set in which the SCI of the first terminal is transmitted. In this case, the second terminal may not be able to perform a sensing operation for SL transmission (e.g., data transmission) of the first terminal transmitted through the plurality of RB sets. In this situation, a data collision between the first terminal and the second terminal may occur. For a terminal that does not perform a sensing operation in the plurality of RB sets, a terminal that transmits data through the plurality of RB sets may repeatedly transmit SCI in all RB sets. In this case, the SCI may be transmitted through the lowest subchannel in a scheduling region of each RB set.

A plurality of RB sets may be configured through signaling (e.g., system information, PC5-RRC signaling, UE-specific RRC signaling, and/or control information). The plurality of RB sets may be configured statically, semi-statically, or dynamically. A guard band between the RB sets may be configured in various manners in consideration of various environments. In SL unicast communication, a PC5-RRC connection establishment procedure between terminals may be performed in advance. In the PC5-RRC connection establishment procedure, configuration information of a plurality of RB sets between the terminals may be signaled. The number of RBs for a guard band according to the configuration information of the plurality of RB sets of the first terminal may be different from the number of RBs for a guard band according to the configuration information of the plurality of RB sets of the second terminal. In this case, a larger value among the number of RBs for the guard band of the first terminal and the number of RBs for the guard band of the second terminal may be applied. Here, the first terminal and the second terminal may be unicast terminals performing unicast communication.

In SL groupcast communication, a groupcast terminal may transmit configuration information of a plurality of RB sets. A groupcast terminal may refer to a terminal that performs groupcast transmission. All terminals within a group may perform communication based on the configuration information received from the groupcast terminal. The numbers of RBs (e.g., the minimum number of RBs) for the guard bands in a plurality of terminals within the group may be different. In this case, the largest value among the numbers of RBs for the guard bands in the group may be applied. In other words, the guard band may be configured in consideration of the maximum number of RBs (e.g., the largest value among the minimum numbers of RBs). For the above operation, the number of RBs (e.g., the minimum number of RBs) for the guard band may be shared in advance among terminals within the group. In other words, the terminals within the group may know in advance the number of RBs (e.g., the minimum number of RBs) for the guard bands of other terminals. When the number of RBs for the guard band is not shared in the group or when the terminal within the group does not know the number of RBs for the guard band of another terminal, the largest value among the numbers of RBs configurable for the guard bands in the group may be applied. In other words, a guard band including the largest number of RBs within the group may be configured.

In SL broadcast communication, the number of RBs for the guard band may be set to the largest value among configurable values. When the number of RB sets configurable in the first terminal is different from the number of RB sets configurable in the second terminal, groupcast communication and/or broadcast communication may be performed in a common resource region in which resource regions of all terminals overlap. As another method, in SL groupcast communication and SL broadcast communication, SL communication (e.g., SL groupcast communication and/or SL broadcast communication) may be performed within one RB set, regardless of whether a plurality of RB sets is configured.

In order to guarantee the number of attempts of LBT operation in SL-U communication, a plurality of start points may be configured. A start point may mean a time point at which data transmission starts, and an LBT operation for the data transmission may be performed before the start point. When data transmission is configured to start at a start point of each slot, if an LBT operation is not successful before the start point of each slot, the terminal cannot start data transmission in the corresponding slot. A plurality of start points (e.g., symbol #0 and symbol #X) may be configured for each slot. X may be a natural number of 1 or greater. In this case, even when an LBT operation is not successful before the first start point (e.g., symbol #0) of a slot, the terminal may start data transmission if an LBT operation succeeds before the next start point (e.g., symbol #X) of the slot.

In order to guarantee the number of attempts of LBT operation and/or to improve resource efficiency, a plurality of start points may be configured in the terminal. As many start points are configured, the number of attempts of LBT operation may increase, and the resource efficiency may be improved. However, when a plurality of start points is configured, calculation of a transport block (TB) size, PSCCH mapping, second-stage SCI mapping, DMRS mapping, and/or the like may need to be newly defined in consideration of each of the plurality of start points. Accordingly, the complexity of the communication system (e.g., SL-U system) may increase. Considering the above problem, it may be preferable to set an appropriate number of start points. For example, it may be preferable to configure two start points.

The first start point among the two start points may be a symbol #0 or a symbol configured by *sl-StartSymbol.* In SL communication (e.g., SL-U communication), data transmission may be performed in a specific period starting from a specific symbol (e.g., a symbol configured by *sl-StartSymbol*) within a slot rather than the entire slot. The specific symbol may be configured as one of symbols #0 to #7. The specific period may include 7, 8, 9, 10, 11, 12, 13, or 14 symbols. The symbol configured by *sl-StartSymbol* may be a symbol (e.g., symbol #Y) other than the symbol #0. Y may be a natural number of 1 or greater.

When the first start point of SL communication (e.g., SL-U communication) is configured by *sl-StartSymbol,* the LBT operation may be performed in consideration of the symbol configured by *sl-StartSymbol.* In this case, since at least one resource (e.g., channel) within the symbols #0 to #Y may be preempted by another system coexisting in the unlicensed band, it may be preferable that the first start point is always fixed to the symbol #0 regardless of the value of *sl-StartSymbol.* When the value of *sl-StartSymbol* is greater than 0 and the LBT operation succeeds, the terminal may perform a transmission operation of an arbitrary signal or a transmission operation of a signal based on cyclic prefix extension (CPE) in the symbol # 0, and may perform actual SL communication (e.g., SL-U communication) from the symbol configured by *sl-StartSymbol.*

The second start point among the two start points may be appropriately configured within the slot in consideration of the LBT operation (e.g., LBT scheme). For example, the second start point may be configured in the symbol #4 or after the symbol #4. When data transmission is performed at the second start point, it may be required to configured a DMRS mapping pattern considering the data transmission. In SL communication (e.g., SL-U communication), a plurality of DMRS mapping patterns according to a plurality of DMRSs may be configured through higher layer signaling. One DMRS mapping pattern for data transmission among the plurality of DMRS mapping patterns may be signaled by SCI. The number of DMRSs may be configured according to the length of PSSCH transmission. For example, the number of DMRSs may be set to 2, 3, or 4. The DMRS mapping pattern in the time domain may be determined based on the length of PSSCH transmission and/or the number of DMRSs. The length of PSSCH transmission may mean the length of the PSSCH. In other words, the length of PSSCH transmission may mean the number of symbols scheduled for the PSSCH transmission.

The DMRS mapping pattern may be configured in consideration of a plurality of start points. DMRS mapping pattern(s) considering the first start point (hereinafter referred to as 'first DMRS mapping pattern(s)') may be configured identically to the existing DMRS mapping pattern(s). DMRS mapping pattern(s) considering the second start point (hereinafter referred to as 'second DMRS mapping pattern(s)') may be configured separately. When the first DMRS mapping pattern(s) and the second DMRS mapping pattern(s) are configured independently, the number of the first DMRS mapping pattern(s) may be different from the number of the second DMRS mapping pattern(s). In this case, the number of bits for indicating the first DMRS mapping pattern in SCI may be set differently from the number of bits for indicating the second DMRS mapping pattern in SCI. For example, when the number of the first DMRS mapping pattern(s) is 3 and the number of the second DMRS mapping pattern(s) is 2, the number of bits required to indicate the first DMRS mapping pattern may be 2, and the number of bits required to indicate the second DMRS mapping pattern may be 1.

When the DMRS mapping pattern(s) are configured independently according to the start point, the overhead of higher layer signaling for configuring the DMRS mapping pattern(s) may increase, and the number of bits for indicating the DMRS mapping pattern in SCI may vary. According to the above situation, the reception complexity of the terminal may increase. When the first DMRS mapping pattern is configured, the second DMRS mapping pattern may be implicitly indicated by the first DMRS mapping pattern. For example, the number M of the second DMRS mapping patterns may be less than or equal to the number N of the first DMRS mapping patterns. Specifically, the number M of the second DMRS mapping patterns may be set to the maximum number considering the length of PSSCH transmission within the number N of the first DMRS mapping patterns.

The number of bits indicating one DMRS mapping pattern (e.g., DMRS mapping pattern for PSSCH transmission) in SCI may be determined based on N among the number N of the first DMRS mapping patterns and the number M of the second DMRS mapping patterns. For example, the number of bits indicating one DMRS mapping pattern in SCI may be log₂(N). In this case, one of the first DMRS mapping patterns may be indicated by log₂(N) bits included in SCI, and one of the second DMRS mapping patterns may be indicated by log₂(N) bits included in the SCI. In other words, the number of bits indicating one of the second DMRS mapping patterns may be set equal to the number of bits indicating one of the first DMRS mapping patterns.

**[Table 6]**

| The length of scheduled resource (the number l_{d} of symbols) | PSSCH DMRS position | | | | | |
|---|---|---|---|---|---|---|
| | PSCCH duration: 2 symbols | | | PSCCH duration: 3 symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

Table 6 above may indicate DMRS mapping patterns in the time domain according to the PSSCH length l_{d} and the number of PSSCH DMRSs. The PSSCH DMRS may be a DMRS used for transmission and reception of a PSSCH. For example, when the first start point is the symbol #0, the PSSCH length l_{d} excluding the last guard symbol within the slot may be a length corresponding to 13 symbols. When the PSCCH duration includes 2 symbols, the number of DMRSs may be 2, 3, or 4. In this case, positions of symbols to which the DMRS is mapped (e.g., the DMRS mapping pattern) may be {3, 10}, {1, 6, 11}, or {1, 4, 7, 10}. The DMRS mapping pattern may be indicated by two bits included in SCI.

When the second start point is the symbol #4, the PSSCH length l_{d} excluding the last guard symbol within the slot may be a length corresponding to 9 symbols. When the number of the first DMRS mapping patterns is 3, the number of second DMRS mapping patterns may be determined as the maximum number (e.g., 2) within 3 (e.g., the number of the first DMRS mapping patterns) without a separate configuration. In other words, the number of the second DMRS mapping patterns may be implicitly determined in consideration of the number of the first DMRS mapping patterns. Signaling of the above-described operation may be performed by two bits for indicating the first DMRS mapping pattern in SCI. According to the above-described method, since separate signaling for indicating the second DMRS mapping pattern is not required, signaling overhead may be reduced. Since the number of bits indicating the DMRS mapping pattern in the SCI is not changed, the reception complexity of the terminal may be reduced.

When a plurality of start points is configured in SL-U communication, a method for calculating a TB size considering the plurality of start points may be required. The TB size may be calculated based on the number of available resource elements (REs) and a modulation and coding scheme (MCS). When a plurality of start points is configured, the number of available REs may vary depending on the position of the start point. A reference number of symbols may be set so that there is no confusion about the TB size between a transmitting terminal and a receiving terminal. The reference number of symbols for calculating the TB size may be defined based on the first start point. When the TB size is calculated based on the first start point, but actual data transmission is performed from the second start point, some data may not be transmitted by rate-matching. In this case, reception performance may deteriorate.

As another method, the reference number of symbols for calculating the TB size may be defined based on the second start point. When the TB size is calculated based on the second start point, but actual data transmission is performed from the first start point, many resources may be available for the data transmission. In this case, some information (e.g., some data) may be additionally transmitted through rate-matching. Accordingly, reception performance may be improved, but resource efficiency may be reduced. In other words, since a TB smaller than the calculated TB size is transmitted, resource efficiency may decrease.

As yet another method, a reference point for calculating the TB size may be configured for each resource pool through signaling (e.g., system information, RRC message). Depending on a circumstance of the communication system (e.g., SL system, SL-U system), the reference number of symbols for calculating the TB size may be determined based on the first start point or the second start point. For example, a success probability of the LBT operation may not be high in an environment where many different traffics coexist. In this case, the reference number of symbols for calculating the TB size may be determined based on the second start point. A success probability of the LBT operation may be high in a low-traffic environment. In this case, the reference number of symbols for calculating the TB size may be determined based on the first start point.

As yet another method, a reference point for calculating the TB size may be dynamically signaled according to a time at which the LBT operation of the transmitting terminal succeeds. Specifically, a time at which data is transmitted according to the success of the LBT operation may be the first start point or the second start point, and the transmitting terminal may dynamically signal a reference point for calculating the TB size according to the time at which the data is transmitted by using SCI (e.g., 1-bit indicator included in first-stage SCI and/or second-stage SCI).

When a plurality of start points is configured in SL-U communication, design of AGC symbol(s) considering the plurality of start points may be required. For example, when a plurality of RB sets is configured within a resource pool (or BWP), SL transmission may be performed at different start points within different RB sets. In this case, AGC issues may occur.

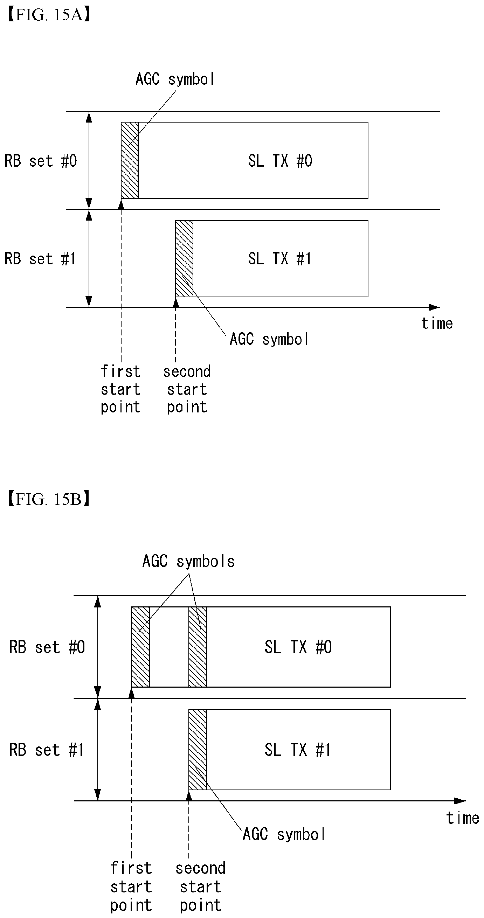

FIG. 15A is a conceptual diagram illustrating a first exemplary embodiment of AGC symbols for FDM SL transmission in a plurality of RB sets, and FIG. 15B is a conceptual diagram illustrating a second exemplary embodiment of AGC symbols for FDM SL transmission in a plurality of RB sets.

Referring to FIG. 15A, an AGC symbol may be configured at one start point. A SL TX #0 may be performed from the first start point in an RB set #0, and a SL TX #1 may be performed from the second start point in an RB set #1. In this case, a received power may be increased by the SL TX #1, and accordingly, an AGC issue (e.g., clipping) may occur with respect to the SL TX #0. The exemplary embodiment of FIG. 15B may be proposed to solve the AGC issue.

Referring to FIG. 15B, AGC symbols may be configured at a plurality of start points. In this case, even when the SL TX #0 and the SL TX #1 are performed, an AGC operation may be newly performed so that an AGC issue does not occur. However, since the AGC symbol is difficult to use for data transmission, when the AGC symbols are configured at a plurality of start points, resource efficiency may decrease and reception complexity of the terminal may increase. In order to solve the above-described problem, when one terminal performs SL transmission through a plurality of RB sets (e.g., all RB sets), it may be preferable that the one terminal uses only one AGC symbol even when a plurality of AGC symbols are configured.

For example, when transmission is performed from the first start point, the terminal may perform an AGC operation using the first AGC symbol (e.g., AGC symbol configured at the first start point), and may use the second AGC symbol (e.g., AGC symbol configured at the second start point) for data transmission. In other words, the terminal may transmit data without performing the AGC operation in the second AGC symbol. For another example, when transmission is performed from the second start point, the terminal may perform an AGC operation using the second AGC symbol.

When only one RB set is configured within a resource pool (or BWP) and a plurality of AGC symbols are configured, it may be preferable for the terminal to perform the AGC operation using one AGC symbol. A plurality of terminals may perform different SL transmissions (e.g., different SL-U transmissions) through a plurality of RB sets. In this case, if the terminal(s) determine that start positions of SL transmission(s) (e.g., SL-U transmission(s)) of other terminal(s) are the same, the terminal(s) may use only one AGC symbol even when a plurality of AGC symbols are configured.

PSFCHs may be periodically configured within the SL resources (e.g., SL-U resources) configured in the above-described manner, as in the exemplary embodiments of FIG. 10 and/or FIG. 11. The PSFCH may be a channel used for transmission of HARQ-ACK (e.g., ACK or NACK) for data. A guard symbol for switching between transmission and reception operations may exist before AGC operation and PSFCH transmission. The terminal may perform an LBT operation in a guard symbol for PSFCH transmission, and may not be able to transmit a PSFCH if the LBT operation fails. The transmitting terminal may determine whether to retransmit data based on a HARQ-ACK (e.g., ACK or NACK) received through a PSFCH. When a data reception failure at the receiving terminal is identified, the transmitting terminal may perform a data retransmission operation. The PSFCH may be a channel that performs an important role in improving reliability of SL communication. It may be preferable to guarantee PSFCH transmission in SL-U communication.

In NR-U communication, a time during which a channel and/or signal can be transmitted due to a success of the LBT operation of the terminal or base station may be defined as a channel occupancy time (COT). Transmission of a channel and/or signal may be possible within the COT. The base station may initiate a COT and share the COT with the terminal. Alternatively, the terminal may initiate a COT and share the COT with the base station. The above-described operation may be referred to as 'COT sharing'. The terminal may transmit a channel and/or signal without performing an LBT operation within the COT shared by the base station. Alternatively, the terminal may transmit a channel and/or signal after performing an LBT operation in a short period within the COT shared by the base station. The base station may transmit a channel and/or signal without performing an LBT operation within the COT shared by the terminal. Alternatively, the base station may transmit a channel and/or signal after performing an LBT operation in a short period within the COT shared by the terminal. The LBT operation performed in a short period may be a type 2 LBT operation. The period in which the type 2 LBT operation is performed may be shorter than the period in which the LBT operation (e.g., type 1 LBT operation) for securing an initial COT is performed.

The COT sharing may be introduced into SL-U communication. A first terminal may perform an LBT operation, may initiate a COT when the LBT operation succeeds, and may share the COT with a second terminal. The second terminal may transmit a SL channel and/or signal without performing an LBT operation within the COT shared by the first terminal. Alternatively, the second terminal may transmit a SL channel and/or signal after performing a simplified LBT operation (e.g., type 2 LBT operation) within the COT shared by the first terminal.

The COT sharing may be applied to a SL data transmission procedure and/or a PSFCH transmission procedure. The first terminal may perform an LBT operation (e.g., type 1 LBT operation) to transmit SL data to the second terminal, may secure a COT when the LBT operation succeeds, and may transmit SL data to the second terminal within the COT. The first terminal may share the remaining period of the COT with the second terminal after transmitting the SL data to the second terminal within the COT. In this case, the second terminal may receive the SL data from the first terminal, and may transmit a HARQ-ACK for the SL data to the first terminal on a PSFCH in the remaining period of the COT. The PSFCH may be configured according to a specific periodicity (e.g., 1, 2, or 4 logical slots).

As in the exemplary embodiment of FIG. 11, a time offset for processing of the receiving terminal may be configured between data reception (e.g., PSSCH reception) and PSFCH transmission. The time offset may be configured by *sl-MinTimeGapPSFCH.* The time offset may be 2 or 3 logical slots. According to the time offset, after receiving the data from the first terminal, the second terminal may not be able to transmit a HARQ-ACK for the data within the COT shared by the first terminal (e.g., the remaining period of the COT). In other words, if a difference between the PSSCH and a PSFCH occasion within the COT is smaller than the time offset in the time domain, the second terminal may not be able to transmit a PSFCH within the COT.

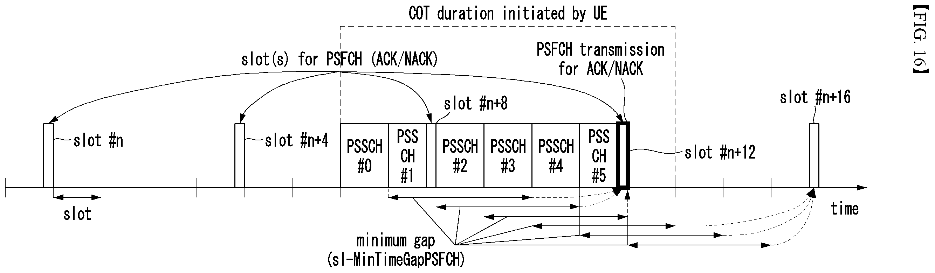

FIG. 16 is a conceptual diagram illustrating a first exemplary embodiment of a method for transmitting a PSFCH within a COT.

Referring to FIG. 16, a PSFCH periodicity may be set to 4 slots, and *sl-MinTimeGapPSFCH* may indicate 3 slots. The first terminal may transmit a PSSCH within a COT and may receive a PSFCH for the PSSCH. The COT may be initiated by the first terminal. The first terminal may transmit PSSCHs #0 to #5 to the second terminal within the COT. The second terminal may receive the PSSCHs #0 to #5 from the first terminal, and may transmit PSFCH(s) for the PSSCHs #0 to #5 to the first terminal. The PSSCHs #0 to #5 may be received by the same terminal or different terminals.

Considering *sl-MinTimeGapPSFCH* (e.g., 3 slots), PSFCH(s) (e.g., PSFCH occasion, PSFCH transmission occasion, or PSFCH resource) corresponding to the PSSCHs #0, #1 and #2 may be located in a slot #n+12 within the COT initiated by the first terminal. Since the PSFCH(s) are located within the COT, the second terminal may transmit the PSFCH(s) to the first terminal in the slot #n+12 after performing a simplified LBT operation (e.g., type 2 LBT operation). In this case, reliable transmission of the PSFCH may be guaranteed.

Considering *sl-MinTimeGapPSFCH* (e.g., 3 slots), PSFCH(s) corresponding to the PSSCHs #3 to #5 may be located in a slot #n+16. In other words, the PSFCH(s) corresponding to the PSSCHs #3 to #5 may be located outside the COT initiated by the first terminal. The second terminal may perform a new LBT operation (e.g., type 1 LBT operation) to transmit the PSFCH(s) in the slot #n+16, and may not be able to transmit the PSFCH(s) if the new LBT operation fails. Considering a failure of the LBT operation, additional PSFCH occasion(s) may be configured.

The base station or the transmitting terminal may configure additional PSFCH occasion(s) to the terminal(s) (e.g., the receiving terminal and/or the transmitting terminal) through signaling. For example, the base station or the transmitting terminal may transmit one message including configuration information of the existing PSFCH occasion and configuration information of additional PSFCH occasion(s) to the terminal(s) (e.g., the receiving terminal and/or the transmitting terminal). Alternatively, for example, the base station or the transmitting terminal may transmit a first message including configuration information of the existing PSFCH occasion to the terminal (e.g., the receiving terminal and/or the transmitting terminal), and may transmit a second message including configuration information of additional PSFCH occasion(s) to the terminal (e.g., the receiving terminal and/or the transmitting terminal). The first message and the second message may be independent messages.

The existing PSFCH transmission resource (e.g., the existing PSFCH occasion) may be a PSFCH occasion occurring first (i.e., first PSFCH occasion) after slots indicated by *sl-MinTimeGapPSFCH* from a reception time of the PSSCH. In SL-U communication, up to N PSFCH occasions may be configured. N may be a natural number. The N PSFCH occasions may include the first PSFCH occasion (e.g., the existing PSFCH occasion). Alternatively, the N PSFCH occasions may not include the first PSFCH occasion (e.g., the existing PSFCH occasion). In this case, one existing PSFCH occasion and N additional PSFCH occasions may be configured, and the total number of PSFCH occasions may be N+1.

When PSFCH transmission fails in the first PSFCH occasion, the terminal may attempt PSFCH transmission in the second PSFCH occasion. The failure of PSFCH transmission may mean a failure of an LBT operation for the PSFCH transmission. Alternatively, the failure of PSFCH transmission may mean a failure of the PSFCH transmission due to a low priority or insufficient transmission power. When N PSFCH occasions are configured, up to N LBT operations may be guaranteed to be performed. When N LBT operations fail, the terminal may drop the PSFCH transmission. According to the above-described method, reliable transmission of the PSFCH may be guaranteed. N may be configured to the terminal(s) through signaling (e.g., system information, PC5-RRC signaling, and/or UE-specific RRC signaling). N may be configured statically or semi-statically. Alternatively, N may be dynamically configured by control information (e.g., DCI, SCI). N may be configured for each resource pool.

Up to N PSFCH occasions may be applied to other PSFCH transmission(s) excluding PSFCH transmission for the PSSCH within the COT. Up to one PSFCH occasion may be configured for PSFCH transmission within the COT. The PSFCH periodicity, transmission-related timeline, and/or COT duration may be preconfigured. Accordingly, the terminal may determine in advance whether PSFCH transmission is possible within the COT. Alternatively, information on whether PSFCH transmission is possible within the COT may be transmitted through signaling (e.g., 1-bit indicator). The terminal may identify the maximum number of PSFCH occasions (e.g., 1 or N) for each PSFCH transmission based on the above-described method, and perform PSFCH transmission in consideration of the identified maximum number of PSFCH occasions.

As another method, up to N PSFCH occasions may be configured for all PSFCH transmissions regardless of whether PSFCH transmission is possible within the COT. In this case, the PSFCH that could not be transmitted due to a failure of the LBT operation and/or another reason (e.g., PSFCH transmission drop according to a priority) may be transmittable. However, the terminal desiring to receiving the PSFCH may need to perform a monitoring operation in N PSFCH occasions. Accordingly, the reception complexity for the PSFCH may increase. Even when up to N PSFCH occasions are guaranteed, use of a plurality of PSFCH occasions may be limited to a specific situation.

For example, even when up to N PSFCH occasions are guaranteed, a plurality of PSFCH occasions may be configured to be used only in a situation where the LBT operation fails. Even when up to N PSFCH occasions are guaranteed, a plurality of PSFCH occasions may be configured to be used only in a situation where PSFCH transmission is dropped. Even when up to N PSFCH occasions are guaranteed, a plurality of PSFCH occasions may be configured to be used only in a situation where PSFCH retransmission is performed. The situation in which a plurality of PSFCH occasion are used when up to N PSFCH occasions are guaranteed may be configured by signaling (e.g., system information, PC5-RRC signaling, UE-specific RRC signaling, control information). The situation in which a plurality of PSFCH occasion are used when up to N PSFCH occasions are guaranteed may be configured statically, semi-statically, or dynamically. The situation in which a plurality of PSFCH occasions are used when up to N PSFCH occasions are guaranteed may be configured for each resource pool.

When a plurality of PSFCH occasions are configured, the transmitting terminal may transmit SCI including information indicating whether to use (e.g., whether to apply) the plurality of PSFCH occasions to the receiving terminal. The SCI may further include scheduling information for data. The receiving terminal may receive the SCI from the transmitting terminal, and may identify whether a plurality of PSFCH occasions are used based on the information included in the SCI. When a plurality of PSFCH occasions are not used, the receiving terminal may attempt transmission of a HARQ-ACK (e.g., PSFCH format) for data received from the transmitting terminal in one PSFCH occasion. When a plurality of PSFCH occasions are used, the receiving terminal may attempt transmission of a HARQ-ACK (e.g., PSFCH format) for data received from the transmitting terminal in the plurality of PSFCH occasions.

When a plurality of PSFCH occasions are configured, a PSFCH resource selection procedure may be newly defined. The terminal may select PSFCH RB(s) based on a position of a slot and/or subchannel in which the PSSCH is transmitted, and may select specific PSFCH resource(s) (e.g., specific PSFCH RB(s) and/or specific sequence index(es)) among a plurality of multiplexable PSFCH resources (e.g., a plurality of sequences in the plurality of PSFCH RBs), based on a TX ID and/or RX ID. The RX ID may be set to 0 according to a transmission scheme of HARQ-ACK (e.g., ACK, NACK).

When a plurality of PSFCH occasions are configured, a PSFCH occasion index may be additionally considered to avoid a collision with the existing PSFCH resource. The operation of selecting the existing PSFCH resource may be the same as a selection operation when a PSFCH occasion index is 0 (e.g., PSFCH occasion #0). Thereafter, for additional PSFCH occasion(s), additional PSFCH occasion indexes (e.g., PSFCH occasions #1, #2, ..., #N-1) may be applied. According to the above-described method, a collision with the existing PSFCH resource may be prevented. The PSFCH occasion index(es) may be applied in the above-described procedure for selecting PSFCH RB(s) based on the position of the slot and/or subchannel and/or the above-described procedure for selecting PSFCH resource(s) from selected PSFCH RB(s).

Specifically, when a PSFCH occasion index is n, in order to represent a slot index (e.g., the slot index may refer to a slot index within a PSFCH period, and the slot index may be different form a general slot index) in the procedure for selecting PSFCH RB(s), (i+n) instead of i may be applied, and to in order to represent a subchannel index, (j+n) instead of j may be applied. When the above-described method is applied in the procedure for selecting PSFCH resource(s) from the selected PSFCH RB(s), (P_{ID}+M_{ID}+n) may be applied instead of (P_{ID}+M_{ID}). As another method, the number of PSFCH RBs for each of the N PSFCH occasions may be set to N, and the N PSFCH occasions may be configured to be selected in an one-to-one correspondence with the N PSFCH RBs.

When a PSFCH occasion index is 0, a PSFCH resource (e.g., cyclic shift) may be configured to be selected within the first PSFCH RB among the N PSFCH RBs. When a PSFCH occasion index is 1, a PSFCH resource (e.g., cyclic shift) may be configured to be selected within the second PSFCH RB among the N PSFCH RBs. When a PSFCH occasion index is 2, a PSFCH resource (e.g., cyclic shift) may be configured to be selected within the third PSFCH RB among N PSFCH RBs. When a PSFCH occasion index is N-1, a PSFCH resource (e.g., cyclic shift) may be configured to be selected within the N-th PSFCH RB among the N PSFCH RBs.

When a plurality of PSFCH occasions are configured, PSFCH resources corresponding to additional PSFCH occasions may be configured independently of the existing PSFCH resource. The PSFCH resources may be configured for each resource pool. The PSFCH resources may be indicated by a bitmap. Separately from the existing PSFCH resource, resources for the plurality of PSFCH occasions may be indicated by bitmap(s). The existing PSFCH resource may be used for PSFCH transmission (e.g., the existing PSFCH transmission) corresponding to the PSFCH occasion #0. The PSFCH resource(s) for additional PSFCH occasion(s) may be used for PSFCH transmission(s) corresponding to the PSFCH occasions #1, #2, ..., and #N-1.

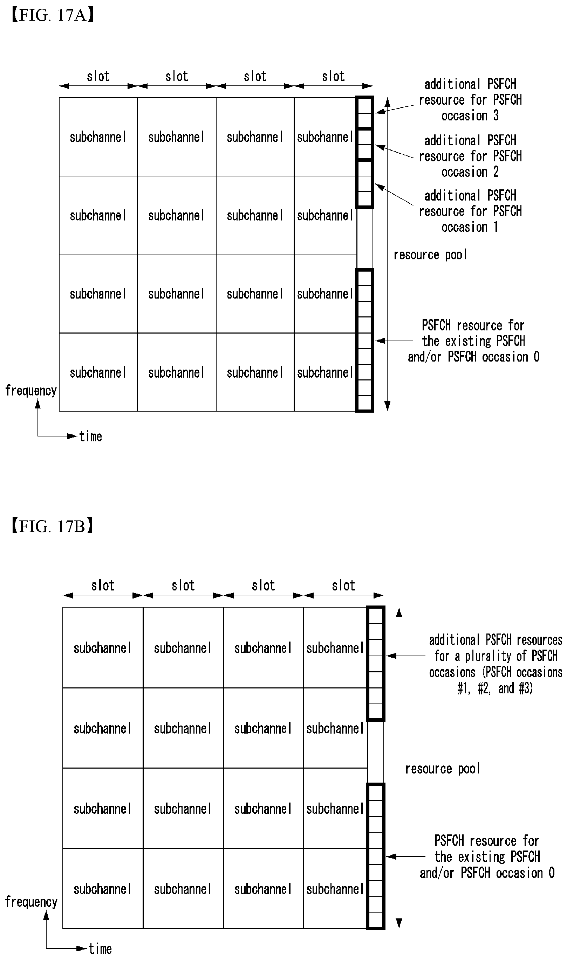

FIG. 17A is a conceptual diagram illustrating a first exemplary embodiment of a resource configuration method for a plurality of PSFCH occasions, and FIG. 17B is a conceptual diagram illustrating a second exemplary embodiment of a resource configuration method for a plurality of PSFCH occasions.

Referring to FIGS. 17A and 17B, PSFCH resources for N PSFCH occasions may be configured. Here, N may be 4. When N PSFCH occasions are configured, PSFCH resource(s) corresponding to the remaining (N-1) PSFCH occasion(s) other than the first PSFCH occasion (e.g., the existing PSFCH occasion) may be configured independently from a PSFCH resource corresponding to the first PSFCH occasion. The PSFCH resource corresponding to the first PSFCH occasion may be the existing PSFCH resource and/or a PSFCH resource corresponding to the PSFCH occasion #0.

In the exemplary embodiment of FIG. 17A, PSFCH resources corresponding to three PSFCH occasions may be independently configured. For example, a PSFCH resource #1 corresponding to the PSFCH occasion #1 may be configured, a PSFCH resource #2 corresponding to the PSFCH occasion #2 may be configured, and a PSFCH resource #3 corresponding to the PSFCH occasion #3 may be configured. The PSFCH resource #1, PSFCH resource #2, and PSFCH resource #3 may not overlap each other.

In the exemplary embodiment of FIG. 17B, one PSFCH resource (e.g., common PSFCH resource region) corresponding to three PSFCH occasions (e.g., (N-1) PSFCH occasions) may be configured. In this case, in order to prevent a collision between PSFCH transmissions in the three PSFCH occasions, it may be required to apply a PSFCH occasion index in a procedure for selecting a PSFCH resource (e.g., a PSFCH resource within the common PSFCH resource region). In the exemplary embodiments of FIG. 17A and/or FIG. 17B, PSFCH resource(s) are configured in a localized form in the frequency domain, but the PSFCH resource(s) may be configured in other forms. For example, the PSFCH resource(s) may be configured in a distributed form in the frequency domain. The PSFCH resource(s) may be indicated by bitmap(s).

In order to satisfy the OCB regulations in an unlicensed band, transmission may be performed using interlaced RBs. An interlace index as well as a subchannel index may be configured. When transmission using a plurality of RB sets is possible, scheduling information may include an RB set index. When an interlace index and an RB set index exist, the interlace index and the RB set index may be used to determine a PSFCH resource (e.g., PSFCH resource region).

In SL communication, a subchannel index and a slot index of a PSSCH may be used to determine an RB sub-group (e.g., one or more preconfigured RBs) for PSFCH transmission. A source ID (e.g., TX ID) and/or a destination ID (e.g., RX ID) may be used to determine an RB index within the RB sub-group and a cyclic shift pair index for an RB corresponding to the RB index. An interlace index and/or RB set index may be used to determine at least one of the RB sub-group, RB index, or cyclic shift pair index.

The interlace index may replace the subchannel index. The interlace index may be used instead of the subchannel index in the procedure of determining the RB sub-group. The RB set index may be applied in the procedure of determining the RB sub-group. The subchannel index may be configured as a combination of the interlace index and the RB set index. In this case, the RB sub-group may be determined by considering the subchannel index instead of the interlace index and the RB set index. In order to determine the RB sub-group, the subchannel index and the slot index may be considered together.

In an unlicensed band, a communication node (e.g., base station or terminal) may perform an LBT operation, and when the LBT operation succeeds, the communication may secure a transmission opportunity (e.g., COT) of a channel and/or signal, and may transmit the channel and/or signal within the secured transmission opportunity. When transmission is not performed during more than a predetermined time (e.g., T_{gap}) within the transmission opportunity, the communication node may lose the transmission opportunity. Then, when transmission is required again, the communication node may perform an LBT operation, and may perform transmission when the LBT operation succeeds.

A PSFCH may be transmitted within the COT, and a guard symbol for switching between transmission and reception operations may exist between a PSSCH resource (e.g., PSSCH symbol) and a PSFCH resource (e.g., PSFCH symbol). If the length of the guard symbol is longer than a predetermined time (e.g., T_{gap}), the communication node may perform an LBT operation for PSFCH transmission within the COT. When the LBT operation fails, the communication node may not be able to perform PSFCH transmission. In order to solve the above-described problem, the communication node may reduce the length of the guard symbol by extending a cyclic prefix (CP) of the PSFCH. When the length of the guard symbol remained by the CP extension of the PSFCH is smaller than T_{gap}, the communication node may perform PSFCH transmission without performing an LBT operation within the COT. Therefore, the problem of a PSFCH transmission failure due to a failure of the LBT operation within the COT may be solved.

A transmission band of a channel and/or signal in an unlicensed band may be configured to satisfy the OCB regulations. Since a PSFCH format 0 includes one RB, the PSFCH format 0 does not satisfy the OCB regulations. Methods for solving the above-described problem are required. In order to satisfy the OCB regulations, the PSFCH format 0 may be configured to have an interlaced structure. In this case, the PSFCH format 0 may be distributed in the frequency domain (e.g., the entire channel bandwidth, a frequency region within the resource pool, or the like). The PSFCH format 0 may be repeatedly transmitted. When the PSFCH format 0 is distributed in the frequency domain within the resource pool, and the PSFCH format 0 is repeatedly transmitted, the number of repetitions of the PSFCH format 0 and/or an interval between repetitions of the PSFCH format 0 in the frequency domain may be implicitly identified by considering the OCB regulations and/or the resource pool (e.g., the entire resource pool). As another method, the number of repetitions of the PSFCH format 0 and/or the interval between repetitions of the PSFCH format 0 in the frequency domain may be explicitly signaled. For example, the number of repetitions of the PSFCH format 0 and/or the interval between repetitions of the PSFCH format 0 in the frequency domain may be signaled together with resource pool configuration information.

Since the same PSFCH format 0 is repeatedly transmitted in the frequency domain according to the above-described method, the OCB regulations may be satisfied. The reception performance of the PSFCH (e.g., PSFCH format 0) may be improved. When the same PSFCH format 0 is repeatedly transmitted in the frequency domain, resource efficiency may decrease because more resources are required compared to the existing PSFCH transmission procedure. As yet another method, a new PSFCH format may be configured to have an interlaced structure in the frequency domain (e.g., the entire frequency domain), and the number of RBs for the new PSFCH format may be configured to satisfy the OCB regulations.

The existing PSFCH format 0 may be transmitted through one RB. The existing PSFCH format 0 may consist of a low peak to average power ratio (PAPR) sequence (e.g., Zadoff-Chu sequence) having a length of 12. When the number of RBs satisfying the OCB regulations is M, the new PSFCH format may consist of a low PAPR sequence having a length of M×12. M may be a natural number. The new PSFCH format may have an interlaced structure. The new PSFCH format may be transmitted as being distributed in a channel bandwidth (e.g., the entire channel bandwidth). In this case, since the length of the sequence increases, the number of feedback information multiplexable in the new PSFCH format may increase compared to the existing PSFCH format 0. The feedback information may refer to a HARQ-ACK, HARQ feedback information, HARQ response, and/or HARQ information bits. A mapping relationship between a specific sequence within the new PSFCH format and feedback information may be defined in consideration of the number of feedback information multiplexable in the new PSFCH format.

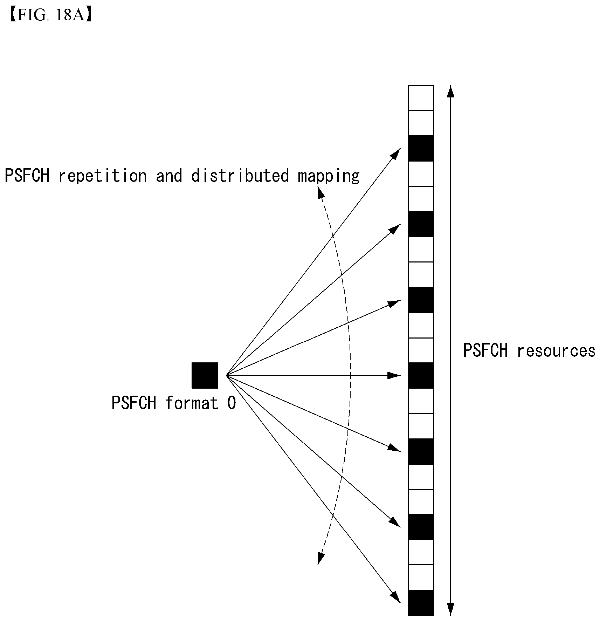

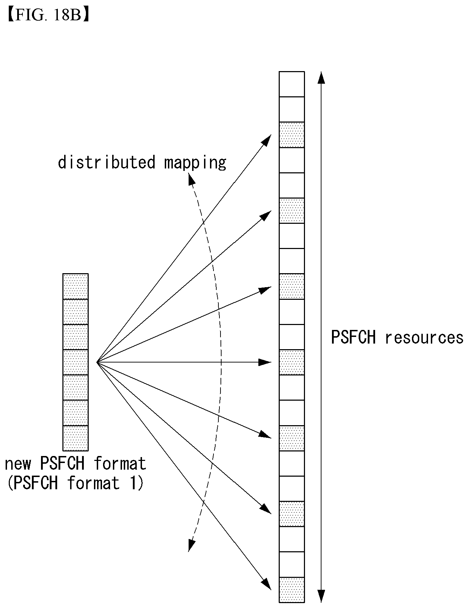

FIG. 18A is a conceptual diagram illustrating a first exemplary embodiment of a PSFCH transmission method, and FIG. 18B is a conceptual diagram illustrating a second exemplary embodiment of a PSFCH transmission method.

Referring to FIG. 18A, the PSFCH format 0 (e.g., the existing PSFCH format 0) may be transmitted as being distributed in the frequency domain. The same PSFCH format 0 may be repeatedly transmitted in the frequency domain. In the exemplary embodiment of FIG. 18A, transmission of the PSFCH format 0 may satisfy the OCB regulations. In the exemplary embodiment of FIG. 18A, a cyclic shift hopping on an RB basis may be applied.

Referring to FIG. 18B, a new PSFCH format having a long sequence may be transmitted as being distributed in the frequency domain. The new PSFCH format may be defined as a PSFCH format 1. In the exemplary embodiment of FIG. 18B, transmission of the new PSFCH format may satisfy the OCB regulations. A PAPR when the new PSFCH format is repeatedly transmitted in the frequency domain may be higher than a PAPR when the existing PSFCH format is distributedly transmitted in the frequency domain. To reduce the PAPR, a cyclic shift hopping on an RB basis may be applied in the exemplary embodiment of FIG. 18B.

As another method, feedback information may be transmitted through the existing PSFCH format 0, and transmission through redundant RB(s) may be performed to satisfy the OCB regulations. The redundant RB(s) may be commonly applied to a plurality of terminals, and the terminal may simultaneously perform a PSFCH transmission operation and a transmission operation of an arbitrary signal (e.g., predefined signal) in the redundant RB(s). According to the above-described method, the OCB regulations may be satisfied. Since a signal transmitted in the redundant RB(s) does not include special information, resource efficiency may decrease according to signal transmission in the redundant RB(s). Thus, the redundant RB(s) may include minimum RB(s) that satisfy the OCB regulations.

The redundant RB(s) may be configured to be distributed in the frequency domain (e.g., the entire frequency domain). The redundant RB(s) may be commonly applied to all terminal(s). The redundant RB(s) may be configured not to overlap with RB(s) for the existing PSFCH transmission. The position(s) of the redundant RB(s) may be configured to the terminal(s) through signaling (e.g., system information, PC5-RRC signaling, UE-specific RRC signaling, control information). The redundant RB(s) may be configured statically, semi-statically, or dynamically. The redundant RB(s) may be configured for each resource pool.

The position of actual PSFCH transmission may be configured based on the position of a PSSCH (e.g., slot position) associated with the actual PSFCH transmission, position of a subchannel, TX ID, RX ID, and/or PSFCH occasion index. The redundant RB(s) may be configured (e.g., selected) in consideration of the position of the actual PSFCH transmission. Resource(s) for PSFCH transmission(s) may be preconfigured for each resource pool, and the redundant RB(s) may be configured (e.g., selected) in consideration of the resource(s) for PSFCH transmission(s). All or some of the redundant RB(s) may be selected according to the position of PSFCH transmission (e.g., actual PSFCH transmission). A procedure for selecting the redundant RB(s) according to the position of PSFCH transmission may be predefined. Alternatively, the terminal may implementally select the redundant RB(s).

For example, the terminal may transmit a signal in the remaining redundant RB(s) excluding RB(s) adjacent to RB(s) (e.g., dedicated RB(s)) in which the PSFCH is transmitted among all redundant RBs. The excluded RB(s) may be RB(s) that satisfy a specific criterion. The RB(s) satisfying the specific criterion may be RB(s) within a predetermined frequency distance or a range of a predetermined number of RBs from the RB(s) in which the PSFCH is transmitted. When all RBs are included in RB(s) within the range of the predetermined number of RBs from the RB(s) in which the PSFCH is transmitted, all the RBs may be defined as RB(s) satisfying the specific criterion. Alternatively, when some RBs are included in RB(s) within the range of the predetermined number of RBs from the RB(s) in which the PSFCH is transmitted, the some RBs may be defined as RB(s) satisfying the specific criterion. If a part of an RB (e.g., some subcarriers) belongs to the RB(s) within the predetermined frequency distance or the range of the predetermined number of RBs from the RB(s) in which the PSFCH is transmitted, the communication node may determine that the part of or the entire RB satisfy the specific criterion.

The predetermined frequency distance and/or the predetermined number of RBs may be configured to the terminal(s) through signaling (e.g., system information, PC5-RRC signaling, UE-specific RRC signaling, control information). The predetermined frequency distance and/or the predetermined number of RBs may be configured statically, semi-statically, or dynamically. The predetermined frequency distance and/or the predetermined number of RBs may be configured for each resource pool.

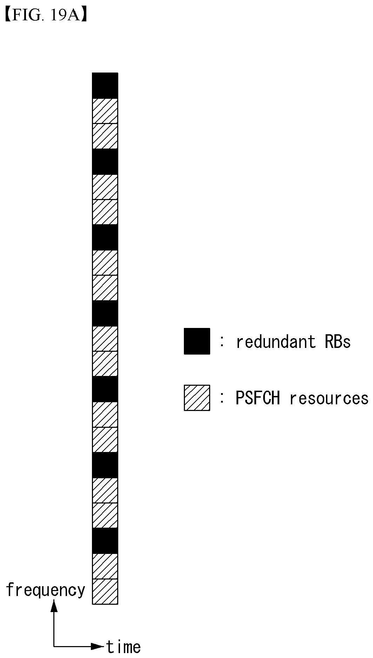

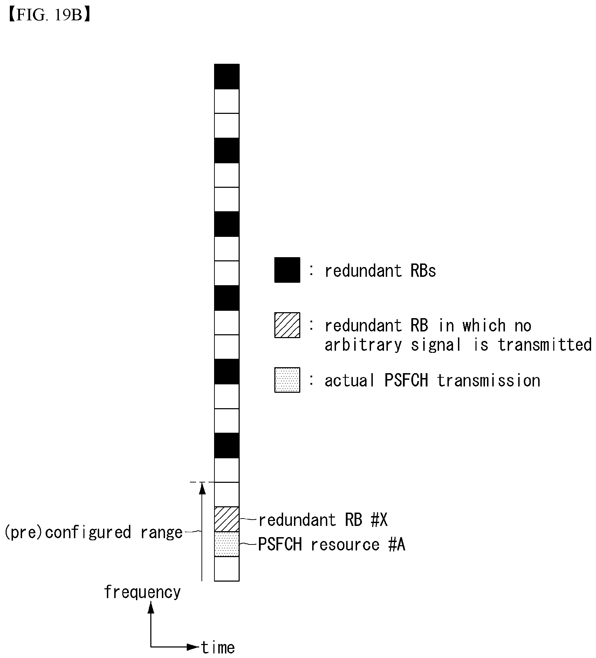

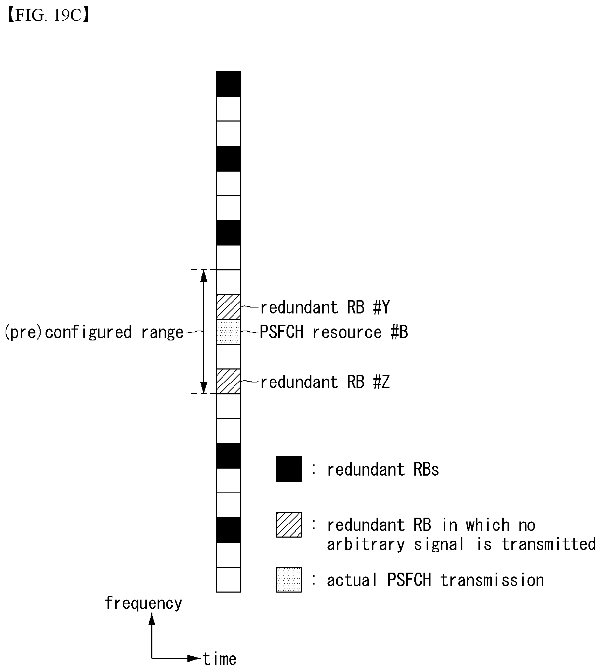

FIG. 19A is a conceptual diagram illustrating a first exemplary embodiment of PSFCH transmission having redundant RB(s), FIG. 19B is a conceptual diagram illustrating a second exemplary embodiment of PSFCH transmission having redundant RB(s), and FIG. 19C is a conceptual diagram illustrating a third exemplary embodiment of PSFCH transmission having redundant RB(s).

Referring to FIGS. 19A to 19C, PSFCH transmission and transmission of a signal (e.g., arbitrary signal) in redundant RB(s) may be performed together. The redundant RB(s) may be referred to as common RB(s). The terminal may select the redundant RB(s) according to the position of PSFCH transmission (e.g., actual PSFCH transmission).

In the exemplary embodiment of FIG. 19A, PSFCH resources and redundant RB(s) may be configured. In the frequency domain, a PSFCH resource (e.g., PSFCH resource region) may be configured in units of two RBs, and redundant RB(s) may be configured between the PSFCH resources. The PSFCH resource may be used for PSFCH transmission, and at least one redundant RB among the redundant RB(s) may be used for transmission of an arbitrary signal. Among the redundant RB(s), redundant RB(s) located within two RBs from a PSFCH resource in which PSFCH transmission is actually performed may not be used for transmission of an arbitrary signal. The configuration of the PSFCH resources and redundant RB(s) in the exemplary embodiment of FIG. 19A may be applied to the exemplary embodiment(s) of FIG. 19B and/or FIG. 19C.

In the exemplary embodiment of FIG. 19B, actual PSFCH transmission may be performed in a PSFCH resource #A. In this case, a redundant RB #X located within two RBs from the PSFCH resource #A may not be used for transmission of an arbitrary signal. In other words, the terminal may transmit an arbitrary signal in redundant RB(s) other than the redundant RB #X among the redundant RBs.

In the exemplary embodiment of FIG. 19C, actual PSFCH transmission may be performed in a PSFCH resource #B. In this case, redundant RBs #Y and #Z located within two RBs from the PSFCH resource #B may not be used for transmission of an arbitrary signal. In other words, the terminal may transmit an arbitrary signal in the remaining redundant RB(s) excluding the redundant RBs #Y and #Z among the redundant RBs.

When redundant RB(s) in which an arbitrary signal is transmitted are selected based on the position of the PSFCH resource in which actual PSFCH transmission is performed, interference between the PSFCH transmission and the transmission of an arbitrary signal may be reduced, and an unnecessary transmission power may be reduced. Accordingly, the PSFCH transmission may be performed efficiently.

A PAPR when transmission of an arbitrary signal and PSFCH transmission are simultaneously performed in a redundant RB set having an interlaced structure may be higher than that of the existing PSFCH transmission. A cyclic shift hopping on an RB basis may be applied to reduce the PAPR when transmission of an arbitrary signal and PSFCH transmission are simultaneously performed in a redundant RB set having an interlaced structure. When a PSFCH transmission period (e.g., PSFCH occasion) exists within a COT and the terminal does not transmit a PSFCH in the PSFCH transmission period, the terminal may lose the COT. Even when PSFCH transmission is not required within the COT, the terminal may transmit an arbitrary signal in redundant RB(s) within the COT to maintain the COT. When the COT is maintained by the above-described method, resources may be efficiently used.

The number (e.g., 1, 2, or 5) of dedicated RBs in which PSFCH transmission is actually performed may be preconfigured. An interval between the common RB(s) (e.g., redundant RB(s)) and the dedicated RB(s) in the frequency domain may be 1 MHz. The interval between the common RB(s) and the dedicated RB(s) may be configured in advance. The above-described configuration operation may be performed through signaling. The common RB(s) may have an interlaced structure. When the interval between the common RB(s) and the dedicated RB(s) in the frequency domain is less than or equal to a threshold, the terminal may not transmit an arbitrary signal in the common RB(s). In this case, the terminal may perform PSFCH transmission in the dedicated RB(s) without transmitting an arbitrary signal. When the interval between the common RB(s) and the dedicated RB(s) in the frequency domain exceeds the threshold, the terminal may simultaneously perform transmission of an arbitrary signal in the common RB(s) and transmission of the PSFCH in the dedicated RB(s). The transmission of an arbitrary signal and the PSFCH transmission may be multiplexed in the frequency domain. The threshold may be configured to the terminal(s) through signaling. The PSFCH transmission methods may be classified as follows.
- PSFCH transmission method 1: The PSFCH format (e.g., PSFCH format 0) may have an interlaced structure, and the PSFCH format may be repeatedly transmitted in the frequency domain.
- PSFCH transmission method 2: PSFCH transmission in the dedicated RB(s) and transmission of an arbitrary signal in the common RB(s) may be performed together.

In the PSFCH transmission methods 1 and/or 2, a cyclic shift hopping may be applied. The PSFCH transmission method may be preconfigured for each resource pool or SL-BWP. For example, the PSFCH transmission method 1 for a first resource pool may be configured through signaling, and the PSFCH transmission method 2 for a second resource pool may be configured through signaling.

For a transmission operation of a SL channel and/or signal (e.g., PSSCH, PSCCH) other than a PSFCH in an unlicensed band, requirements of an LBT operation and/or OCB regulations may need to be satisfied. PSSCH transmission may be performed to satisfy the OCB regulations. A PSSCH resource may be configured to have an interlaced structure in the frequency domain. When a PSSCH resource has an interlaced structure to satisfy the OCB regulations, a terminal receiving a PSSCH in the PSSCH resource may transmit a PSFCH for the PSSCH in a resource corresponding to the PSSCH resource. In this case, transmission of the PSFCH may satisfy the OCB regulations.

When PSFCH transmission is performed within a COT, a transmission collision between terminals may be prevented. When PSFCH transmission is required outside the COT, the PSFCH transmission may be performed based on the proposed method(s). The terminal may implicitly identify whether PSFCH transmission is possible within the COT based on a reception time of the PSSCH, PSFCH periodicity, transmission-related timeline, and/or COT duration. Alternatively, information on whether PSFCH transmission is possible within the COT may be explicitly indicated to the terminal through signaling (e.g., 1-bit indicator (e.g., COT indicator) included in SCI).

When a plurality of PSFCH occasions are not guaranteed and an LBT operation for PSFCH transmission fails, or when an LBT operation for PSFCH transmission fails and it is not possible to delay the PSFCH transmission until the next PSFCH resource, the terminal may transmit a HARQ-ACK (e.g., feedback information) through SCI. In other words, the terminal may transmit SCI including the HARQ-ACK. The terminal may inform the HARQ-ACK using a 1-bit indicator included in the SCI. The SCI may further include information on a PSSCH associated with the HARQ-ACK indicated by the SCI (e.g., information for identifying the PSSCH). For example, the SCI including the HARQ-ACK may further include a TX ID and/or RX ID for the PSSCH associated with the HARQ-ACK. The TX ID of the PSSCH may be replaced with a TX ID or RX ID of the SCI (e.g., existing SCI or PSCCH). The RX ID of the PSSCH may be replaced with the RX ID or TX ID of the SCI (e.g., existing SCI or PSCCH). The SCI including the HARQ-ACK may further include information on a slot and/or subchannel (e.g., first subchannel) in which the PSSCH associated with the HARQ-ACK is transmitted. The information on the slot may mean a slot index. The information on the subchannel may mean a subchannel index.

The SCI including the HARQ-ACK may be first-stage SCI or second-stage SCI. The SCI including the HARQ-ACK may include scheduling information for a PSSCH. In this case, the terminal may transmit the SCI including the HARQ-ACK and scheduling information, and may transmit data on the PSSCH scheduled by the SCI. When data does not exist, the terminal may transmit a dummy signal on the PSSCH scheduled by the SCI. Alternatively, when data does not exist, the terminal may not perform transmission on the PSSCH scheduled by the SCI.

In order to distinguish between a state in which data is transmitted on the PSSCH and a state in which a dummy signal is transmitted on the PSSCH or distinguish between a state in which data is transmitted on the PSSCH and a state in which no transmission is performed on the PSSCH, the SCI may include a specific field indicating a specific state. A first state indicated by the specific field included in the SCI may indicate the state in which data is transmitted on the PSSCH. A second state indicated by the specific field included in the SCI may indicate the state in which a dummy signal is transmitted on the PSSCH. A third state indicated by the specific field included in the SCI may indicate the state in which no transmission is performed on the PSSCH.

A plurality of RB sets may need to be considered in PSCCH transmission, PSSCH transmission, and/or PSFCH transmission. Data may be transmitted through a plurality of RB sets having an interlaced structure. In this case, SCI (e.g., SCI for scheduling data transmission) may include a specific RB set index for PSFCH transmission. The transmitting terminal may transmit SCI including scheduling information and a specific RB set index for PSFCH transmission to the receiving terminal. The transmitting terminal may transmit data to the receiving terminal based on the scheduling information included in the SCI. The receiving terminal may receive the SCI from the transmitting terminal, and may identify the scheduling information included in the SCI and the specific RB set index for PSFCH transmission.

The receiving terminal may receive the data from the transmitting terminal based on the scheduling information included in the SCI. The receiving terminal may perform an LBT operation for a specific RB set indicated by the SCI to perform PSFCH transmission for the data. When the LBT operation for the specific RB set is successful, the receiving terminal may perform PSFCH transmission through the specific RB set. When the LBT operation for the specific RB set fails, the terminal may not be able to perform PSFCH transmission. In this case, SL performance may be degraded. To solve the above-described problem, information indicating to perform PSFCH transmission using a plurality of RB sets may be signaled. In the above-described signaling procedure, a plurality of RB sets among all RB sets may be indicated by RB set index(es) and/or a bitmap. When PSFCH transmission using a plurality of RB sets is indicated, the terminal may perform an LBT operation for each of the plurality of RB sets, and may perform PSFCH transmission in RB set(s) in which the LBT operation succeeds. When the LBT operation succeeds in two or more RB sets, the terminal may repeatedly transmit the same PSFCH in the two or more RB sets.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first terminal, comprising:
receiving sidelink control information (SCI) from a second terminal;
receiving data scheduled by the SCI from the second terminal;
generating a hybrid automatic repeat request-acknowledgement (HARQ-ACK) for the data; and
performing a first listen before talk (LBT) operation for transmission of the HARQ-ACK in a first physical sidelink feedback channel (PSFCH) occasion among N PSFCH occasions configured in the first terminal, N being a natural number.

2. The method according to claim 1, wherein the N PSFCH occasions include the first PSFCH occasion and (N-1) PSFCH occasion(s), and the first PSFCH occasion and the (N-1) PSFCH occasion(s) are configured by one message or configured independently by different messages.

3. The method according to claim 1, wherein the SCI includes first information indicating whether the N PSFCH occasions are applied, the N PSFCH occasions are used for transmission of the HARQ-ACK when the first information indicates that the N PSFCH occasions are applied, and only the first PSFCH occasion is used for transmission of the HARQ-ACK when the first information indicates that the N PSFCH occasions are not applied.

4. The method according to claim 1, wherein when the first terminal cannot transmit the ARQ-ACK within a channel occupancy time (COT), the N PSFCH occasions are used for transmission of the HARQ-ACK.

5. The method according to claim 1, further comprising:
in response to that the first LBT operation fails, performing a second LBT operation for transmission of the HARQ-ACK in a second PSFCH occasion among the N PSFCH occasions; and
in response to that the second LBT operation succeeds, transmitting a PSFCH format including the HARQ-ACK to the second terminal in the second PSFCH occasion.

6. The method according to claim 5, wherein the PSFCH format is repeatedly transmitted in frequency domain.

7. The method according to claim 5, further comprising: transmitting a first signal, wherein transmission of the PSFCH format and transmission of the first signal are multiplexed in frequency domain, the transmission of the PFSCH format is performed in dedicated resource block(s) (RB(s)) in frequency domain, and the transmission of the first signal is performed in common RB(s) in frequency domain.

8. The method according to claim 7, wherein the transmission of the first signal in the common RB(s) is performed when a frequency interval between the dedicated RB(s) and the common RB(s) exceeds a threshold.

9. The method according to claim 1, further comprising: transmitting a first signal in common RB(s) to maintain a COT.

10. A method of a second terminal, comprising:
transmitting sidelink control information (SCI) to a first terminal;
transmitting data scheduled by the SCI to the first terminal; and
performing a monitoring operation on one or more physical sidelink feedback channel (PSFCH) occasions among N PSFCH occasions configured in the first terminal to receive a hybrid automatic repeat request-acknowledgement (HARQ-ACK) for the data, N being a natural number.

11. The method according to claim 10, wherein the N PSFCH occasions include the first PSFCH occasion and (N-1) PSFCH occasion(s), and the first PSFCH occasion and the (N-1) PSFCH occasion(s) are configured by one message or configured independently by different messages.

12. The method according to claim 10, wherein the SCI includes first information indicating whether the N PSFCH occasions are applied, the N PSFCH occasions are used for transmission of the HARQ-ACK when the first information indicates that the N PSFCH occasions are applied, and only the first PSFCH occasion is used for transmission of the HARQ-ACK when the first information indicates that the N PSFCH occasions are not applied.

13. The method according to claim 10, wherein when the first terminal cannot transmit the ARQ-ACK within a channel occupancy time (COT), the N PSFCH occasions are used for transmission of the HARQ-ACK.

14. The method according to claim 10, further comprising: receiving a PSFCH format including the HARQ-ACK from the first terminal based on the monitoring operation.

15. The method according to claim 14, wherein the PSFCH format is repeatedly received in frequency domain or received in dedicated resource block(s) (RB(s)) in frequency domain.

16. A first terminal comprising a processor,
wherein the processor causes the first terminal to perform:
receiving sidelink control information (SCI) from a second terminal;
receiving data scheduled by the SCI from the second terminal;
generating a hybrid automatic repeat request-acknowledgement (HARQ-ACK) for the data; and
performing a first listen before talk (LBT) operation for transmission of the HARQ-ACK in a first physical sidelink feedback channel (PSFCH) occasion among N PSFCH occasions configured in the first terminal, N being a natural number.

17. The first terminal according to claim 16, wherein the SCI includes first information indicating whether the N PSFCH occasions are applied, the N PSFCH occasions are used for transmission of the HARQ-ACK when the first information indicates that the N PSFCH occasions are applied, and only the first PSFCH occasion is used for transmission of the HARQ-ACK when the first information indicates that the N PSFCH occasions are not applied.

18. The first terminal according to claim 16, wherein when the first terminal cannot transmit the ARQ-ACK within a channel occupancy time (COT), the N PSFCH occasions are used for transmission of the HARQ-ACK.

19. The first terminal according to claim 16, wherein the processor further causes the first terminal to perform:
in response to that the first LBT operation fails, performing a second LBT operation for transmission of the HARQ-ACK in a second PSFCH occasion among the N PSFCH occasions; and
in response to that the second LBT operation succeeds, transmitting a PSFCH format including the HARQ-ACK to the second terminal in the second PSFCH occasion.

20. The first terminal according to claim 19, wherein the processor further causes the first terminal to transmit a first signal, wherein transmission of the PSFCH format and transmission of the first signal are multiplexed in frequency domain, the transmission of the PSFCH format is performed in dedicated resource block(s) (RB(s)) in frequency domain, and the transmission of the first signal is performed in common RB(s) in frequency domain.
